# EUROPEAN PATENT SPECIFICATION

(11) **EP 3 563 368 B1**
(45) Date of publication and mention of the grant of the patent: **06.04.2022**
(21) Application number: 18734024.5
(22) Date of filing: 01.01.2018
(51) Int. Cl.: G09B 23/00, G09B 23/30, G09B 23/32, G09B 23/28

(54) **HEART SIMULATION SYSTEM FOR MEDICAL SERVICES OR DIAGNOSTIC MACHINES**
HERZSIMULATIONSSYSTEM FÜR MEDIZINISCHE DIENSTE ODER DIAGNOSEMASCHINEN
SYSTÈME DE SIMULATION CARDIAQUE POUR DES SERVICES MÉDICAUX OU DES MACHINES DE DIAGNOSTIC

(30) Priority: 31.12.2016 US 201662441339 P
(43) Date of publication of application: 06.11.2019
(73) Proprietor: Tallman, Richard D. Jr., Poway, CA 92064 (US)
(72) Inventor: Tallman, Richard D. Jr., Poway, CA 92064 (US)
(74) Representative: Derry, Paul Stefan
(86) International application number: PCT/US2018/012009
(87) International publication number: WO 2018/126254

(56) References cited:
- US-A1- 2012 288 840
- US-A1- 2013 196 301
- US-A1- 2014 099 617
- US-A1- 2014 370 490
- US-A1- 2016 027 345
- US-A1- 2016 027 345
- US-A1- 2016 111 023
- US-B2- 7 963 924
- US-B2- 8 608 484
- US-B2- 9 183 763

## Description

### CROSS-REFERENCE TO RELATED APPLICATIONS

This application claims priority to provisional application(s): Ser. No. 62441339 filed December 31, 2016, titled "HEART SIMULATION SYSTEM FOR MEDICAL SERVICES OR DIAGNOSTIC MACHINE".

### FIELD OF TECHNOLOGY

This disclosure relates generally to the technical fields of medical devices, and in one example embodiment, this disclosure relates to a method, apparatus and system of a heart simulator used in a patient simulation system with diagnostic and patient services machines.

### BACKGROUND

A patient simulator (e.g., a simulation apparatus) may be used in the training of health-care students (e.g., pharmacy students, nursing students, medical students). The patient simulator may provide insight and experience without the associated risks associated with on-the-job training with actual patient (see US2016/0027345). However, the patient simulator may be limited in its ability to simulate a range of possible medical conditions. As a result, the medical simulator may not be usable in a wide range of medical training.

One type of the patient simulator may be implemented substantially in software. Using a graphical user interface (GUI) and software programming, the patient simulator implemented substantially in software may only provide limited insight into an actual patient care scenario because of its partial approximation of a real-world physical interaction. Further, a simulation conducted substantially in software may lack depth given that the simulated experience may not adequately model external stressors (e.g., presence of blood, screaming patients, multiple complications among different patients simultaneously). Therefore, the patient simulator implemented solely in software may not adequately prepare the health care students for actual patient care scenarios in the physical world. This lack of preparation can result in errors, omissions, and sometimes a loss of life.

It is critical that a simulated heart perform as closely as possible to a real patient's heart, e.g., a human heart. If a simulated heart mis-performs or mis-simulates, or misrepresents a real patient's heart, then the technician learning from the heart simulator, in the larger patient simulation system, and/or in combination with diagnostic or therapeutic machines, would end up learning the wrong cues, the wrong signals, the wrong warning signs, and the wrong improvement signs from the simulated heart. This mis- performance can be in the appearance, movement, shape, and timing, of the hearts muscle contractions and relaxing, and can also be in the analytics and sensor readings presented in a diagnostic or therapeutic machine display. This is true whether the heart is healthy or in any one of a huge range of combinations and permutations of degrees of a pathological conditions. Said differently, if a simulated heart simulates signs of deterioration when a technician applies a diagnostic or therapeutic machines to the simulated heart that would otherwise make an actual human heart show signs of recovery, or vice-versa, then the simulated heart is dangerously mis-training the technician.

SUMMARY The present invention relates to a medical simulation system and the corresponding method as defined in the respective independent claims 1 and 15.

A hydraulic based hardware and software simulation system which models a human heart alone or within a larger system that also models a human patient and attaches either the simulated heart and/or the simulated human patient to any of a variety of extracorporeal cardiopulmonary support devices such as a heart lung machine (HLM), extracorporeal membrane oxygenation (ECMO) machine, emergency cardiac life support (ECLS) device, ventricular assist device (VAD), dialysis machines, hyperthermic intraperitoneal chemotherapy (HIPEC) machine, aortic balloon pump, and other diagnostic machines.

The system uses proprietary models of the cardiovascular system, the respiratory system, the gas exchanged by an artificial lung, and drug interactions and combines them into a realistic and reactive model of the human body.

The models in the system are combined with the appropriate sensors and actuators to detect and react appropriately to the impacts imposed by the various extracorporeal cardiopulmonary support devices on the human body. These reactions include the dynamic and long-term impact on the cardiovascular system, the respiratory system, the hematological system, and the renal system.

The patient reactions or changes are displayed on a variety of 'virtual' operating room (O.R.) and ICU monitors that are part of the simulator. Displays include signals from singular systems or any combination of signals from systems such as a pulse oximeter, a cerebral oximeter, an in-line blood gas monitor, a blood gas analyzer, an activated clotting time (ACT) analyzer, EKG monitor, a blood pressure monitor, or bispectral index (BIS) cerebral monitor.

A predetermined clinical scenario is used to control the virtual patient by displaying of appropriate monitors, providing verbal commands and alerts, displaying and manipulating the O.R. clock, and providing for the sequence of events that make a realistic therapeutic or operating room environment. This scenario can be pre-established and loaded into the simulator using a single spreadsheet file.

Configuration of the patient simulator is accomplished with predetermined clinical scenarios. It comprises displaying the appropriate monitors available, choice of verbal commands and alerts, O.R. clock manipulation, and sequencing of events. These custom clinical scenarios can be pre-established and loaded into the patient simulator using a single spreadsheet. The user or operator (trainer) has the option to write custom scenarios for the trainee and can apply clinical data including arterial pressure, pulmonary artery pressure, EKG-including multiple arrhythmias, ventilator, activated clotting time (A.C.T). Plus, arterial color duplex imaging (CDI), venous CDI, blood monitoring unit (BMU), spectrum medical variable input patient electronic record, HMS, blood gas analyzer, and NIRS. In addition, patient- specific factors (sex, height, weight, body surface area (BSA)), physiologic factors including left ventricular (LV) and right ventricular (RV) contractility, heart rate, depth of anesthesia and metabolic rate can all be included in the clinical scenario.

The system maintains an electronic medical record that can be saved and accessed during or after the simulator system exercise for a given clinical scenario. This medical record contains all of the time-stamped information relevant to the case including patient vital signs, medications given and special events and circumstances. In addition, this electronic medical record can be sent out in real time to various data management systems (DMSs) designed to collect and maintain clinical data during surgical cases. This is accomplished by communication via the serial port of the computing device using standard communication protocols.

The heart simulator provides a very accurate heart chamber (ventricles and atriums) performance in terms of displacement timing, displacement volume, displacement frequency, and dynamic reactions in harmony with a separate mechanical pumping system that simulates the heart's functional fluid pressure, volume, beat, fluctuation, and other dynamic reactions. Thus, the pump is synchronized with the physical appearance of the heart to create an extremely accurate and realistic overall simulated patient behavior, reaction, and performance as compared to a real patient. This guarantees superior training of technicians, and medical staff that operate on diagnose, or provide therapy to, patients, and specifically the cardio and/or pulmonary health of patients.

The heart simulation apparatus comprises a (physical) heart model, preferably having multiple chambers, a means for mechanically displacing at least a portion of the heart model; displacement system for pumping fluid, and a fluid line coupled to the heart model. The fluid line communicates fluid to the heart model to simulate a fluid displacement of a live heart; and the means for mechanically displacing at least a portion of the heart model is configured to simulate a beating motion of the live heart. In one embodiment, the fluid line and the means for mechanically displacing at least the portion of the heart model are configured to simulate the fluid displacement and the beating motion of the heart model simultaneously. The fluid line and the means for mechanically displacing at least a portion of the heart are configured to operate at a reduced performance level; and the reduced performance level is correlated to represent a reduced performance of a diseased heart.

In one embodiment, the communication of fluid in the fluid line is operated independently from the means for mechanically displacing at least a portion of the heart model.

The heart simulation apparatus also includes an input line coupled to the means for mechanically displacing at least a portion of the heart model. The input line is configured to receive a simulated heart signal to stimulate the means for mechanically displacing at least a portion of the heart model; and the simulated heart signal is dynamically variable in order to simulate a dynamic variability of the live heart. In another embodiment, the simulated heart signal is coupled to an external patient simulation system where the heart model is slated to the external patient simulation system; the heart model is configured to change in response to the simulated heart signal received from another system; and the heart simulation apparatus reacts dynamically to the change in the simulated heart signal.

The heart simulation apparatus is programmable. In one embodiment, the heart simulation apparatus is based on the simulated heart signal. In another embodiment, clinical models include of a healthy heart, or of a heart having one or more combinations and permutations of degrees of a pathological conditions.

The heart simulation apparatus in another embodiment includes a heart model, a pump system, and a fluid line that are coupled. The pump system further includes a positive displacement apparatus (pump) that is configured to have at least one of a variable frequency to simulate a variable simulated heart rate, and a variable displacement to simulate a variable heart performance. In one embodiment, the pump comprises a bi-directional piston having an extension stroke and a retraction stroke. The extension stroke (diastolic) and the retraction (systolic resting) stroke each has a variable displacement profile that can be independent of each other. In another embodiment, the displacement profile for the extension stroke and the displacement profile for the retraction stroke is one of a symmetric (rhythmic) and an asymmetric (arrhythmic) profile.

The heart simulation apparatus also includes a motor coupled to a positive displacement apparatus. The motor can either be of a stepper (discrete steps, digital) motor and a servo (continuous, analog) motor. The motor is controllable to operate a plurality of patterns that represents different simulated heart conditions. Alternatively, a pressure and suction source, e.g., in a hospital room, can be regulated by valves to simulate the suction and pressure needed to simulate the contraction and relaxing of the cardiac muscles. To improve the simulation, the pump system reacts physiologically to represent at least one simulated heart signal for simulating a coronary pathology of at least one of: a fibrillating heart rate; an arrhythmic heart rate; a myocardial ischemia; a hypertrophy condition; a tachycardia condition; a myocardial infarction; and an arterial sclerosis condition. In another embodiment, the simulated coronary pathology includes a cardiovascular aneurism; a valve prolapse; and a cardiovascular stroke (aneurism or clot).

Because the pump reacts in a physiological manner, the physical heart that the pump operates also reacts physiologically, in terms of the hearth contraction, relaxing, the physical shape and appearance of the heart such as the rising and falling and overall movements that are typical of a real human heart.

The heart simulation apparatus further includes an expandable balloon disposed in at least one of the multiple chambers of the heart model, wherein the expandable balloon is coupled to the fluid circuit to simulate a contraction and an expansion of at least one of the multiple chambers of the heart model.

A medical simulation system includes a heart simulation apparatus and a fluid pumping system for pumping fluid to the heart simulation apparatus in order to simulate beating of the heart model. Additionally, the medical simulation system includes a computing device coupled to the heart simulation apparatus. The computing device includes a processor and a memory coupled to each other to execute instructions for controlling the variables of the heart simulation apparatus including physical displacement, beat rate, heart chamber displacement, and other variables that simulate the full physiological functioning of a human heart. The computing device interacts with the heart simulation apparatus by generating and communicating at least one simulated heart signal to the heart simulation apparatus. In response, the heart simulation apparatus responds dynamically based on the simulated heart signal. The computing device also receives physical data from the heart simulation apparatus and provides instructions to the patient module to implement a clinical scenario. Sensors disposed in the heart simulation apparatus respond to user inputs, such as palpation, heart massage, and other surgical, diagnostic, and therapeutic techniques performed on the heart simulation apparatus. The computing device changes the simulated heart signal over time per changes arising from another system; and the heart simulation apparatus reacts over time to the change in the simulated heart signal.

Within the medical simulation system, the heart simulation apparatus is responsive to the at least one simulated heart signal from the computing device; the at least one simulated heart signal simulates at least one pathological condition of: a fibrillating heart rate; an arrhythmic heart rate; a myocardial ischemia; a hypertrophy condition; a tachycardia condition; a myocardial infarction; and an arterial sclerosis condition.

The medical simulation system further includes; a patient display/delivery device coupled to the computing device, the patient display/delivery device including an operator-input interface for selecting at least one operator-chosen variable of a clinical scenario and a selectable setting of at least one of the therapeutic machines. The computing device is coupled to the patient display/delivery device to receive the at least one operator-chosen variable; and the computing device generates the simulated heart signal based at least in part on the operator-chosen variable.

An instructor display is included in the medical simulation system, in which it is coupled to the computing device, the instructor display including an instructor-input interface for adjusting at least one instructor-chosen variable of a clinical scenario, a condition metric of the heart simulation apparatus, and a performance metric of at least one of the therapeutic machines. The computing device is coupled to the instructor display to receive the at least one instructor-chosen variable; and the computing device generates the simulated heart signal based at least in part on the instructor-chosen variable.

The medical simulation system further includes a plurality of the therapeutic machines coupled to the computing device, wherein the computing device calculates a simulated performance of at least one of the therapeutic machines based on an interaction between one or more of the plurality of therapeutic machines. The at least one simulated heart signal generated for the heart simulation apparatus includes at least one of a displacement profile signal for an extension stroke, a displacement profile signal for a retraction stroke, and a frequency. The computing device calculates a virtual data for at least one of the following variables of the heart simulation apparatus: a heart rate; a systolic blood pressure and a diastolic blood pressure; an EKG; an O2 saturation level; and a C-reactive protein level. The computing device simulates a reflexive action of the heart simulation apparatus using an algorithm; the algorithm receives at least one input from at least one of one or more therapeutic machines, coronary pharmaceuticals, patient physiological condition, operator-variables, and instructor variables; and the computing device generates the at least one simulated heart signal based on the algorithm.

The methods, operations, processes, systems, and apparatuses disclosed herein may be implemented in any means for achieving various aspects, and may be executed in a form of a machine-readable medium, and/or a machine accessible medium, embodying a set of instructions that, when executed by a machine or a data processing system (e.g., a computer system), in one or more different sequences, cause the machine to perform any of the operations disclosed herein. Other features will be apparent from the accompanying drawings and from the detailed description that follows. Accordingly, the specification and drawings are to be regarded in an illustrative rather than a restrictive sense.

### BRIEF DESCRIPTION OF THE DRAWINGS

Example embodiments are illustrated by way of example and not limitation in the figures of the accompanying drawings, in which like references indicate similar elements and in which:
**Figure 1A** is a functional block diagram of a beating heart function that interfaces with a simulated fluid flow, a simulated mechanical displacement, and therapeutic equipment functions, according to one or more embodiments.
**Figure 1B** is a diagram of a medical simulation system having a simulated cardio pumping model and simulated physical beating heart model coupled to one or more therapeutic devices, according to one or more embodiments.
**Figure 2A** is a block diagram of the functional inputs and outputs of the simulation system, according to one or more embodiments.
**Figure 2B** is a block diagram of the functional inputs and outputs of the simulation module portion of the simulation system, according to one or more embodiments.
**Figure 3** is a schematic of the patient module, according to one or more embodiments.
**Figures 4A-4D** are embodiments of a physical heart model with physical simulated mechanical displacement and physically accessible fluid flow, according to one or more embodiments.
**Figure 5** is a mechanical motion system that creates mechanical motion in chambers of a simulated physical heart model, according to one or more embodiments.
**Figure 6** is a flowchart of a process simulating a patient interaction with a therapeutic machine, according to one or more embodiments.
**Figure 7** is a flowchart for operating a simulated beating heart system, according to one or more embodiments.
**Figure 8** is a graph of a cardiac cycle showing variable parameters implemented in a heart simulation system, according to one or more embodiments.
**Figure 9** is a pressure-volume diagram of the four phases of a cardiac cycle, according to one or more embodiments.
**Figure 10A** is an ECG trace of a healthy human heart to be simulated by the beating heart simulator, according to one or more embodiments.
**Figure 10B** is an ECG trace of a heart in ventricular tachycardia to be simulated by the beating heart simulator, according to one or more embodiments.
**Figure 10C** is an ECG trace of a heart in ventricular fibrillation to be simulated by the beating heart simulator, according to one or more embodiments.
**Figure 11** is a screen shot of the patient monitor/ delivery device, according to one or more embodiments.
**Figure 12** is a graphical user interface (GUI) of the simulation module for a heart-lung machine (HLM), as shown on the instructor display, according to one or more embodiments.
**Figure 13** is a clinical scenario spreadsheet excerpt, according to one or more embodiments.

Other features of the present embodiments will be apparent from the accompanying drawings and from the detailed description that follows.

### DETAILED DESCRIPTION

A method, apparatus and system of patient simulation for medical services and diagnostic machines is disclosed. In the following description, for the purposes of explanation, numerous specific details are set forth in order to provide a thorough understanding of the various embodiments. It will be evident, however to one skilled in the art that various embodiments may be practiced without these specific details.

### Function Diagram:

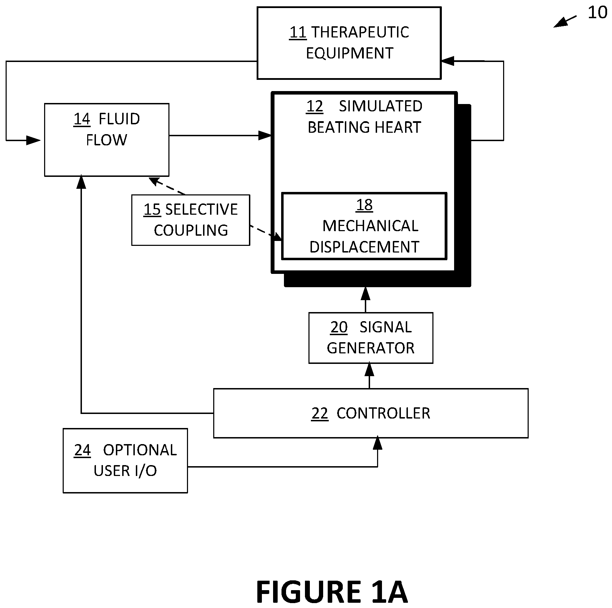

Referring now to **Figure 1A****,** a functional block diagram 10 is shown of a beating heart function 12 that interfaces with a simulated fluid flow 14, a simulated mechanical displacement 18, and therapeutic equipment functions 11, according to one or more embodiments. The goal is to create a beating heart model that can be used as a realistic tool for a user/learner to interface therapeutic equipment with more realistic performance of a real human heart being supported by the same therapeutic equipment 11, and to have programmability and control over the beating heart function 12 to realistically simulate a wide variety of cardio pathologies.

Simulated beating heart function 12 has an input of fluid flow 14 and an internal mechanical displacement function 18. A selective coupling 15 between the fluid flow function 14 and the internal mechanical displacement function 18 provides a more realistic overall behavior of heart function 12. Mechanical displacement function 18 is driven by a signal generator 20 that is in turn controlled by controller 22, which can receive optional user inputs and provide optional user outputs (I/O) 24. In this manner, simulated beating heart function 12 is flexible and programmable to accommodate a wide variety of clinical scenarios and equipment changes. Functional block diagram 10 is partially implemented in hardware (for realistic behavior) and is partially implemented in software (for flexibility, programmability, extensiveness of vital stats production, and reduced cost). Overall, a hybrid system of both hardware and software accomplishes the goal of providing a beating heart function that is a realistic tool to interface therapeutic equipment functions 11 that provides a user/learner of the therapeutic equipment functions 11 with more realistic experiences of a real human heart being supported by the same therapeutic equipment. Subsequent figures illustrate various embodiments of structure means and method means that implement these functions and relationships.

### Patient Simulator

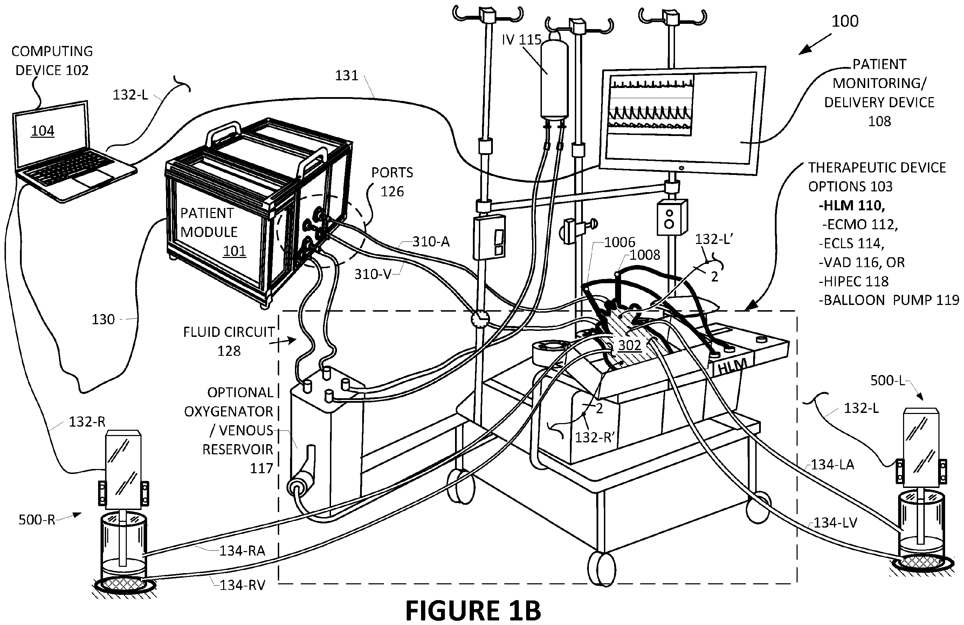

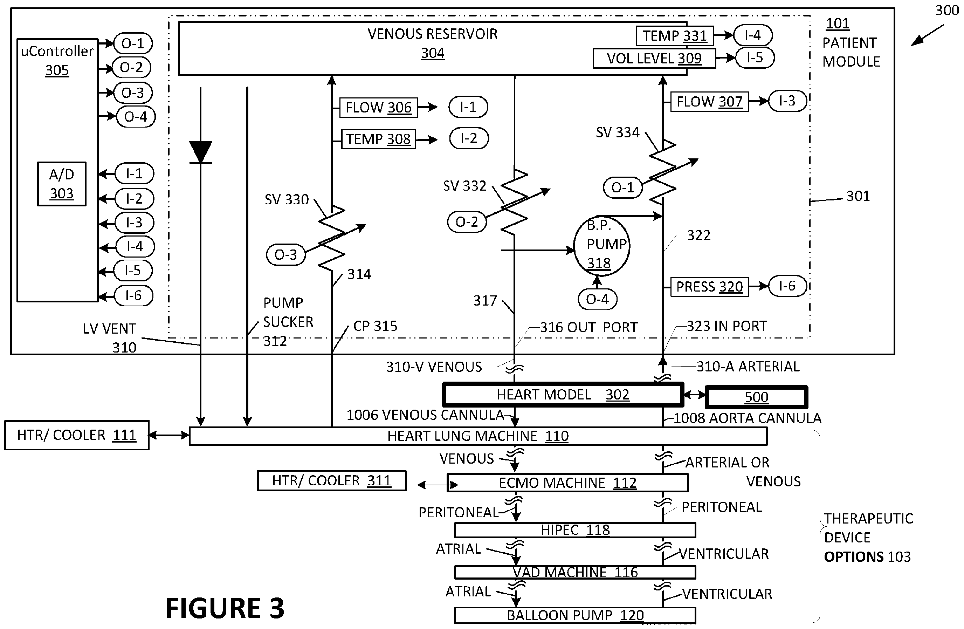

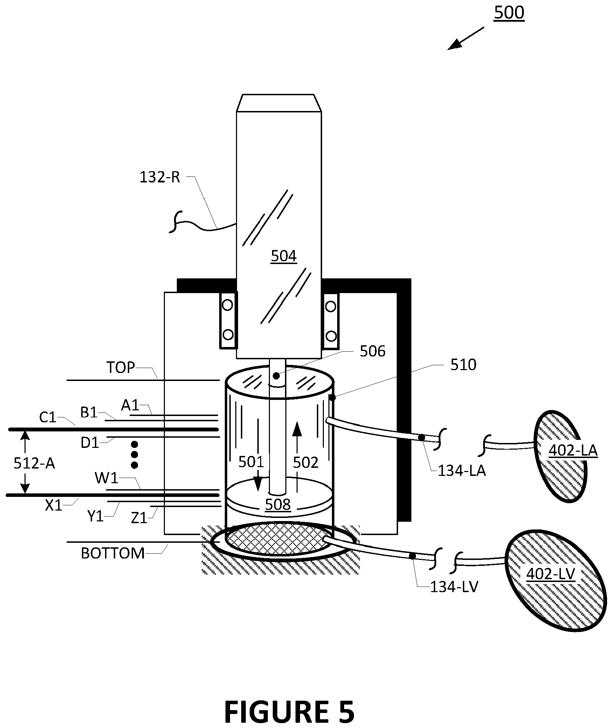

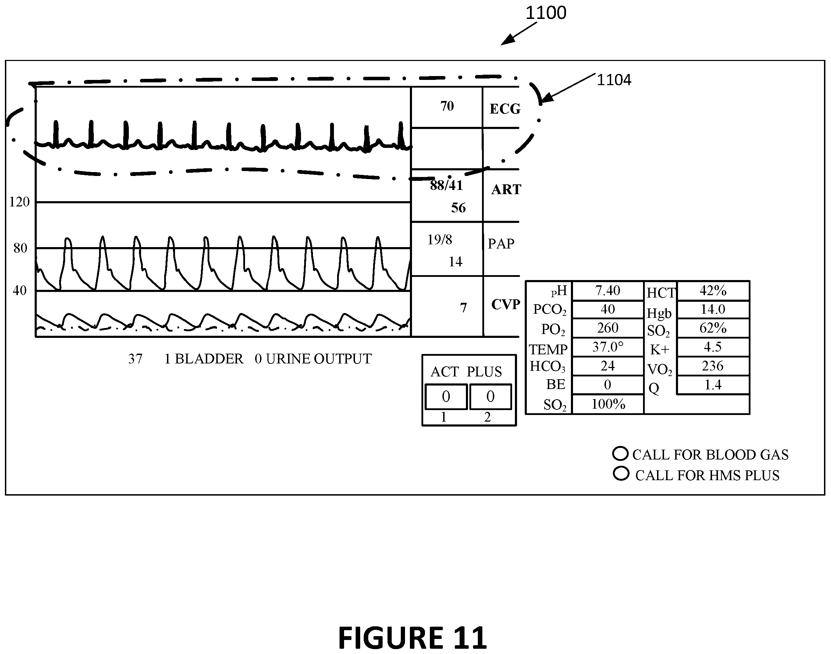

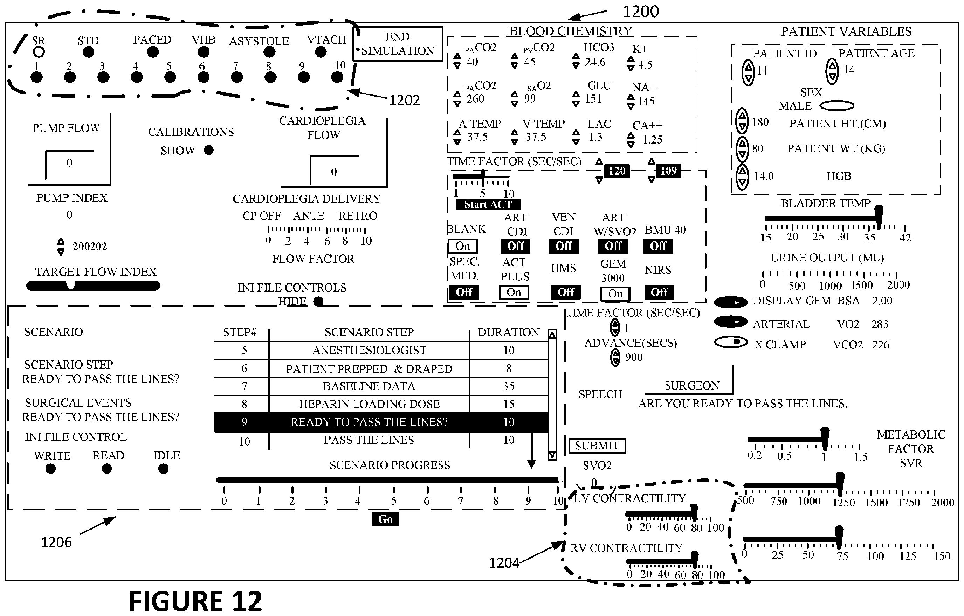

Referring to **Figure 1B****,** a medical simulation system 100 coupled to one or more therapeutic device options 103 is shown, accordance with one or more embodiments. Medical simulation system 100 is one embodiment of the structural and methodological means by which functions of **Figure 1A** are implemented. Medical simulation system 100 includes a patient module 101 that represents a body of a patient, electrically coupled to a computing device 102. Patient module 101 contains a fluid circuit, input and output ports, fluid sensors, and control devices, as described in more detail in subsequent **Figure 3****.** Computing device 102 implements one or more algorithms to simulate and /or evaluate vital signs of the patient module 101 and to provide: i)a simulated cardio blood flow to simulated beating heart model 302 (**see** **Figure 3**); ii) a simulated mechanical motion in chambers of a simulated physical heart model 302 (see Figure 5); and iii) a graphical user interface (GUI) of the simulation module on patient monitor/ delivery device 108 (see Figure 11) for a chosen therapeutic device (103) during an execution of a clinical scenario. A graphical user interface (GUI) on instructor display 104 shows simulation system options, clinical scenario results, and other relevant medical information, thereby allowing the instructor to control and manipulate the simulation, as described in more detail in **Figures 12****.**

A patient monitor/delivery device 108 performs many functions as well, such as displaying physical data that was measured in patient module 101 and at least a portion of the clinical scenario. Furthermore, patient monitor/delivery device 108 displays virtual data calculated by an algorithm in computing device 102, to which it is coupled, as well as clinical scenario data read from memory in computing device. Patient monitor/delivery device 108 also accepts input from a system operator, or user, (aka learner) who is being trained as a clinician on the simulation system 100, and who can select virtual control data for virtual portions of therapeutic devices or for an entire therapeutic device and communicate that virtual data back to computing device 102. For example, patient monitor/ delivery device 108 can display an oxygen (O2) blood level of the patient, or receive a clinician's input to increase a virtual control of O2 delivery to the ECMO machine 112. In combination with the clinician physically changing a blood flow rate setting on the actual ECMO machine 112 itself, a resulting increase of the patient module blood level is shown as increased on the same display, with the blood level calculation being performed by the computing device 102. Patient monitor/delivery device 108 also provides audio/visual (A/V) training materials during the clinical scenario to simulate a real-life surgical operation or other hospital setting in which the therapeutic device could be used. Consequently, a display function is implemented as well as a delivery function of virtual controls and drug and diagnostic testing by patient display / delivery device. Alternatively, separate discrete screens can be provided for each function.

Both the patient module 101, beating heart model 302, and computing device 102 of simulation system 100 are flexibly designed to interface with a plurality of extracorporeal therapeutic device options 103, including standalone HLM machine 110, ECMO machine 112, ECLS 114, VAD machine 116, HIPEC 118 and balloon pump 119 (only HLM shown) directly via an external fluid circuit 128 and indirectly via an electrical coupling 130, e.g.,., a 10/100 Base-T Cat 5 cable. Patient module 101 has a set of input and output ports 126 and internal components packaged in a small form factor aluminum housing (400mm x 330mm x 280mm, for example) that is easily transported and substantially rugged, with a fast set-up time that supports any of the therapeutic device options 103. Computing device 102 has a superset of programming capability to be selectively implemented for a chosen one of the therapeutic device options 103, and a superset of capabilities for beating heart performance simulation with different pathologies. Peripheral patient support, such as IV equipment 115 and oxygenator /venous reservoir 117, couple to the simulation system 100 to manage fluid supplies realistically. Thus, compared to a medical simulator that is designed to couple only to a single specific therapeutic device, the present embodiment has much greater flexibility and usefulness, thereby reducing cost, and increasing training effectiveness.

Patient module 101 provides basic core fluid functions (e.g., arterial flow rate and pressure) for realistic fluid coupling to therapeutic devices, while computing device 102 provides any additional fluid functionality (e.g., related central venous pressure (CVP)) and simulating of patient vital sign (such as EKG, blood pH level) via software. This allows much greater flexibility of the simulation system 100 to interface with any of a wide variety of therapeutic device options 103. Consequently, simulation system 100 provides a holistic simulation vehicle for cost-effectively training clinicians. Physical material, e.g., fluid, is communicated between patient module 101 and the therapeutic device options 103. Signals from computing device 102 are used to control physical components in the patient module 101, such as a stepper valve. Physical data, such as fluid pressure, is communicated from patient module 101 to computing device 102.

In one embodiment, a comma-separated values (CSV) electronic document, e.g. a spreadsheet, dictates the clinical scenario, with field-separated columns for over 50 physiological and monitoring variables in a practically unlimited number of sequential steps, represented by at least one line of data. The spreadsheet is read by the computing device, and evaluated by the algorithmic application software in combination with the measured fluid data, and the virtually selected variable to provide the simulated patient vital signs and long-term clinical course. A virtually selected variable is a variable or a setting that a clinician sets via the patient monitor/delivery device 108 that is used by computing device 102 to algorithmically calculate a related, but not physically measured, patient parameter, such as pulmonary artery blood pressure.

### Control Plane

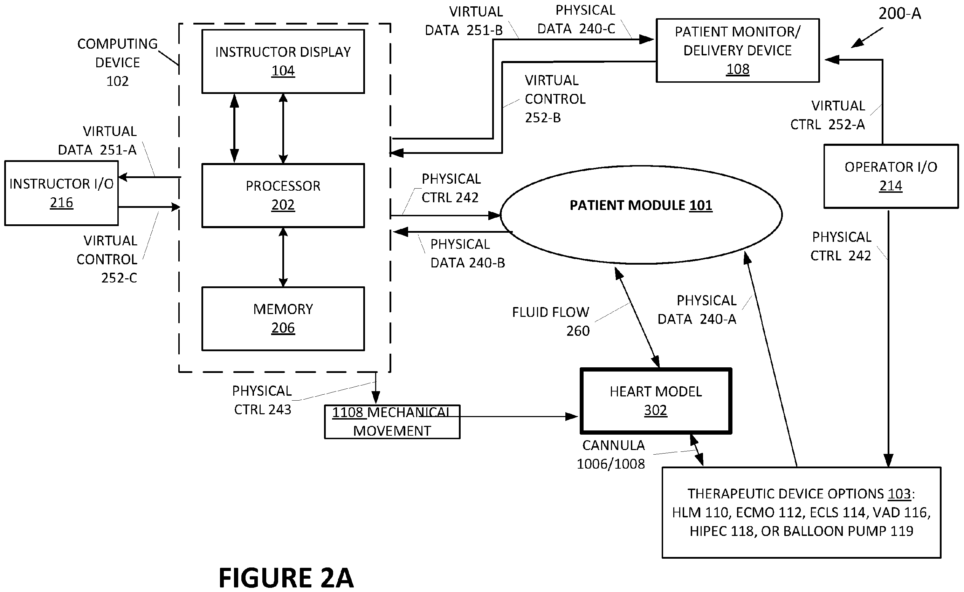

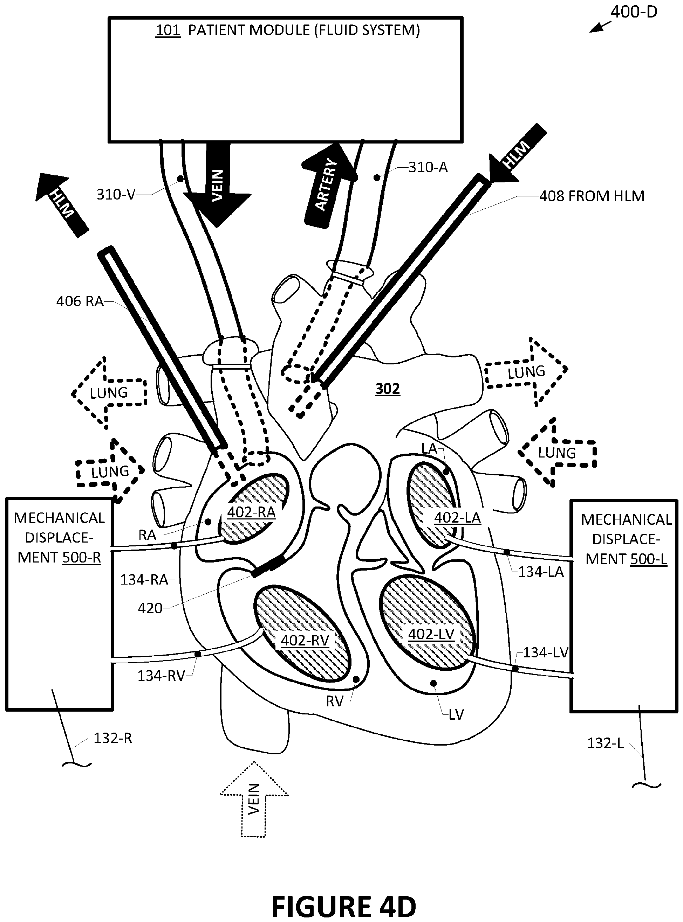

Referring now to **Figure 2A**, a block diagram 200-A of the functional inputs and outputs of the simulation system is shown, according to one or more embodiments. Physical beating heart model 302 is disposed between and coupled to patient module 101 for fluid flow, and therapeutic device options 103, as coupled via cannula 1006/1008 (see **Figures 1B** **and** **4D**). Computing device 102 includes a processor 202 coupled to memory 206 to receive physical data 240-B via an analog to digital (A/D) converter (not shown) from the patient module and to implement one or more algorithms to simulate one or more vital signs of a hypothetical patient simulated by the patient module 101 during an execution of a clinical scenario. In one embodiment, physical data includes one or more of a fluid pressure, fluid temperature, flow rate, as described in **Figure 3****.**

Instructor display 204 illustrates data related to the clinical scenario. Instructor I/O 216 is any communication device and connection such as a keyboard, mouse, touch screen, wireless device, and network connection for remote access, to share data between an instructor and computing device 102. Physical control is provided from computing device 102 to patient module 101 to implement clinical scenario conditions, e.g., a venous stepper valve is closed in response to a clinical scenario condition of a patient bleeding out. Operator I/O 214 implements physical control input 242 to therapeutic device options 103 by manually touching their controls. Operator I/O 214 also implements virtual control of therapeutic device options 103 via virtual control input 252-A to patient monitor/delivery device 208 and propagated virtual control input 252-B to computing device 102. This effectuates a change by operator I/O 214 by algorithmically calculating the effect on patient vital signs and long term clinical care, and passing that resulting virtual data back to patient monitor /delivery device 208 via virtual data 251-B and to instructor display as virtual data 251-A. Thus, a clinician may selectively choose a drug delivery option in a GUI displayed on the touch screen of the patient monitor/delivery device 108. That selection would be communicated to computing device 102 that would then algorithmically consider the input when evaluating other variables to determine the vital signs that the computing device will simulate and then display on the patient monitor/delivery device 108.

Physical data 240-A, e.g., flow, pressure, and temperature, is communicated from therapeutic device options 103 via the fluid transfer. Physical data 240-B is communicated from patient module 101 to computing device 102 by virtue of fluid sensors in patient module 101, and is read by computing device 102. The clinical scenarios and parameters can be recorded directly to memory 206, at a desired sampling rate, or to a printer (not shown) in response to a touch screen request by instructor I/O 216 or operator/clinician I/O 214. Simulation system 100 also has an ability to add different types and sizes of flow sensors to accommodate a wide range of simulated patient sizes.

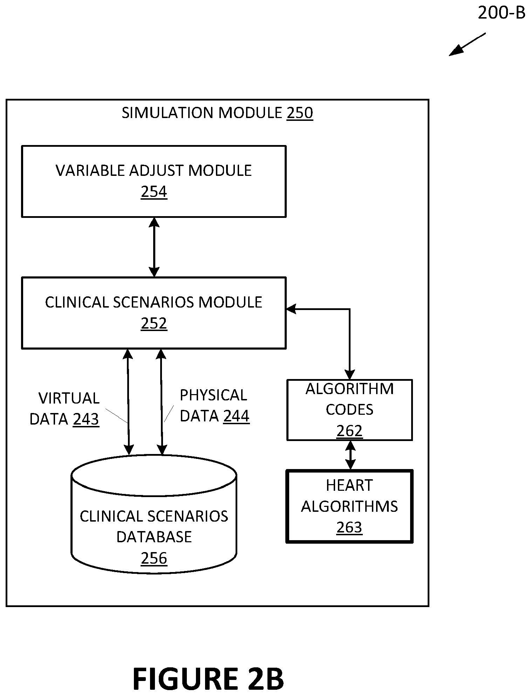

Referring now to **Figure 2**B, a block diagram 200-B shows the functional inputs and outputs of the simulation module 250 portion of the simulation system 100 is shown, according to one or more embodiments. Simulation module 250 is implemented in computing device 102 by storing clinical scenario database 256 and algorithm codes 262 and heart algorithms 263 in memory 206 and by accessing and executing same using processor 202. Inputs to simulation module 250 include physical data 240-B from patient module 101, virtual control 252-B from patient monitor/delivery device 208, and instructor I/O 216, as shown in **Figure 2A**. Both virtual data 251 and physical data 240 are stored and retrieved from clinical scenarios database 256 during the execution of the clinical scenario.

Referring now to **Figure 3**, a schematic of the patient module 101 is shown, according to one or more embodiments. Physical beating heart model 302 is introduced between patient module 101, sourcing the simulated cardio fluid flow, and therapeutic device options 103 in order to provide an actual heart (albeit an animal heart or a rubber heart) on which to couple a therapeutic device via venous cannula and aorta cannula 408. In addition, mechanical motion system 500 is coupled to beating heart model 302 to provide mechanical motion in chambers of a simulated physical heart model for an overall realistic simulation system.

Patient module 101 includes a fluid circuit 301 and includes a microcontroller 305, coupled to each other for simulating a hydraulic function of a hypothetical patient as shown in the simulation system 100 of **Figure 1B****.** Fluid circuit 301 contains conduits, sensors, and control devices coupled to each other. In particular, fluid circuit 301 includes an input (IN) conduit, or line, 322 having an input port 323, a pressure transducer 320 for sensing input pressure, a variable stepper motor proportioning valve (stepper valve or SV) 334, shown as a variable resistance symbol, for varying the resistance on the input conduit, or line, 322 per the clinical scenario, and a flow meter 307 for measuring a flow rate of fluid in the input conduit 322. Similarly, fluid circuit 301 includes an output (OUT) conduit, or line, 317 having an output port 316, and a variable stepper motor proportioning valve 332 for varying the flow restriction, or resistance, on the output conduit 317 per the clinical scenario. An additional input conduit is provided with cardiopulmonary (CP) input conduit 314 having a CP port 315, a variable stepper motor proportioning valve (SV) 330 for varying the resistance on the CP conduit 314 line per the clinical scenario, a flow meter (FLOW) 306 for measuring a flow rate of fluid in the CP conduit 314, and a temperature sensor 308 for measuring temperature (TEMP) of fluid in CP conduit 314. Two additional lines are provided as a pump sucker 312, which provides suction of blood from fluid circuit 301 similar to that used by a surgeon to remove blood from the chest cavity during heart surgery, and a vent 310, which allows for the purging of air from the fluid circuit 301. All these described lines and conduits are disposed parallel to each other from the ports to the venous reservoir 304, to which they are appropriately coupled. Input ports 323, 316, 315 and ports for pump sucker 312 and vent 310, are shown in **Figure 1B** as ports 126. The specific function and settings of the valves and the impact of the sensors in the fluid circuit 301 are described hereinafter, based upon which of the therapeutic device options 103 is coupled to the patient module 101. The variable stepper motor proportioning valves 330, 332, and 334 can have a flow rate over a range from about 50 ml/min for a neonate to about 6.5 L/min for an adult.

A blood pressure (B.P.) pump 318, implemented as a positive displacement roller pump, couples output conduit 317 with input conduit 322 to provide a baseline heartbeat and pressure in input conduit 322 for initial coupling of patient module 101 to a therapeutic device, as part of the protocol for establishing a connection between and confirming the connection with a heartbeat and pressure. That is, some therapeutic machines check for a patient pulse prior to initiating treatment. The speed of the pulsating B.P. pump 318 matches the patient heart rate as dictated by the clinical scenario. The volume of the venous reservoir 304 can be adjusted to accommodate different patient sizes by manually inserting a displacement object inside the reservoir or by adjusting the volume (VOL) level sensor 309 such that the threshold level is lower for a smaller size patient. Temperature sensor 331 provides temperature reading for the fluid in the venous reservoir 304. The fluid sensors for flow 307, pressure 320 and resistance 334 of the fluid flow in input conduit 322 is common to HLM 110, ECMO machine 112, VAD machine 116, and aortic balloon pump 119 since all these therapeutic devices access blood and are concerned with measuring pressures and flows and modeling the body to show responses to different protocols and devices that affect the pressure and flow.

Variable resistance symbol represent variable pressure drops in fluid conduit between patient and heart lung machine to simulate a pinched or occluded catheter, or a catheter pressed against the wall of the heart or vessel that can stop or restrict the blood flow. The variable pressure drop can be accomplished by any mechanical means of restricting the effective diameter of the tubing. For example, stepper motor valve 334 can be controlled by feedback from the pressure transducer 320 and thereby be used to maintain the blood pressure to match the readout in the algorithmic model and on the ICU monitor.

Therapeutic device options 103 include any one of the HLM 110, ECMO machine 112, HIPEC 118, VAD machine 116, and balloon pump 119 are all selectively coupled to input port 323 and output port 316 as the two common fluid ports of patient module 101 that apply to each of the therapeutic device options 103. Note that input conduit 322 and output conduit 317 are referred to generally as 'input' and 'output' because the specific human blood vessels they represent are different from each other. For example, for the HLM 110, input conduit 322 represents an arterial blood vessel, while output conduit 317 represents a venous blood vessel. In contrast, for the ECMO machine 112, input conduit 322 represents an arterial or venous blood vessel, while output conduit 317 represents a venous blood vessel. This embodiment for ECMO allows a different simulated blood path of venous out/ venous in (VV) or venous out / arterial in (VA) to the patient module 101 without any plumbing hardware changes in the fluid circuit 301. As another example, for the HIPEC machine 118, input conduit 322 represents an input to the peritoneal cavity, while output conduit 317 represents an output to the peritoneal cavity. In contrast, for the VAD machine 116 and balloon pump 119, input conduit 322 represents a ventricular blood vessel, while output conduit 317 represents an atrial blood vessel. Just as input line 322 and output line 317 can be configured and labeled to represent different blood vessels in the body, so can stepper valves be configured and labeled to represent different functions and settings, depending upon the therapeutic device option chosen and the clinical scenario operated on the simulation system. For example, stepper valve 334 provides the resistance in the arterial (input) line 322 to maintain an arterial blood pressure reading 320 at the pressure indicated on the patient display /delivery device 108, described hereinafter. This arterial blood pressure is determined by several factors dictated by the clinical scenario including the patient size, clinical pathology and blood flow 306 generated by the heart lung machine 110 or ECMO machine 112. Likewise, stepper valve 332 controls the rate of blood drainage from the patient through the venous drain. Partially closing valve 332 will result in an accumulation of blood in reservoir 304 with the concomitant increase in the patient's simulated blood volume and reflex alterations in blood pressure.

The flexibility of patient module 101 arises from, in part, tracking and labeling the inputs to and outputs from microcontroller 305, which are subsequently communicated to computing device 102, according to an identified one of the therapeutic device options 103 utilized in the clinical scenario. Thus, for HLM simulation, pressure 320 and flow meter 307 sensor outputs are labeled and evaluated in the clinical scenario as 'arterial' blood vessel values, while the same sensor outputs are labeled and evaluated in the clinical scenario as 'peritoneal' fluid values for a HIPEC simulation. Optional heater (HTR) / cooler 311 is coupled to the HLM 110 and the ECMO machine 112 for improved features in the clinical scenario. The HLM 110 requires additional plumbing that is provided in patient module 101 as pump sucker 312 and LV vent line 310, which are included in the superset of fluid conduits 301 to as to provide the universal application to therapeutic device options 103.

Microcontroller (uController) 305 interfaces multiple input lines (1-1 through 1-6), for sensing input values, and multiple output lines (O-1 through O-4), for controlling the different control devices, via an analog to digital (A/D) converter 303. In particular, inputs to uController 305 include CP flow meter 306 input I-1, CP temperature 308 input I-2, input conduit flow meter 307 input 1-3, venous reservoir temperature 309 input 1-4, venous reservoir level 309 input 1-5, and input conduit pressure 320 as input 1-6. In particular, outputs from uController 305 include input conduit stepper valve 334 as output O-1, output conduit stepper valve 322 as output O-2, CP stepper valve 330 as output O-3, B.P. pump 318 control as output O-4. Microcontroller 305 includes programmability functions with memory for storing firmware or software, e.g., on EEPROM, such that microcontroller 305 can behave 'reflexively' to conditions sensed in patient module 101. Thus, for example, if volume level sensor 309 input 1-5 reaches a low threshold, i.e. an indication that the patient is bleeding out, then uController 305 reads that low threshold value, and outputs a signal to close CP conduit stepper valve 330, thereby maintaining fluid in patient module 101 and avoiding a dry operation, while indicating to a HLM 110, via the pumped fluid, that a problem exists.

Microcontroller 305 is a real-time and modular embedded control system that, in one embodiment, includes a processor, FPGA, 512 MB built in memory, and ten slots for modules, all coupled to each other. Available modules include analog I/O, industrial digital I/O, TTL I/O, reed relays, RTDs, SSRs, stepper driver and other control functionality. The simulator software takes the sensor readings and uses them as input into the physiological algorithms to generate the patient's responses and drive the O.R. monitor. Scenario actions that require mechanical responses will drive the uController 305 to control the pump and stepper valves as shown in **Figure 3**. While the specific embodiment is provided herein for microcontroller 305, those skilled in the art appreciate that a wide variety of computing devices can be utilized to provide the control and computations needed in patient module 101.

Microcontroller 305 is coupled to computing device 102 via the A/D converter module 303 such that data from the patient module 101, e.g.,, bypass blood flow rate, cardioplegia flow and circulating blood volume, is communicated to computing device 102 and combined with data from sensors and actuators to detect and react appropriately to the inputs imposed by the various extracorporeal and cardiopulmonary support devices on the human body. These reactions include the dynamic and long-term impact on the cardiovascular system, the respiratory system, the hematological system, and the renal system.

Still referring to **Figure 3**, an IV fluids drip bag (shown 115 in **Figure 1B**) is coupleable to patient module 101 directly (not shown), or indirectly via reservoir 117, for the clinician to administer additional fluid. This is included as part of the simulation because adding fluid is a common treatment used to increase the circulating blood volume of the patient. This will greatly affect the blood pressure and cardiac output. Patient module 101 can sense any fluid administration by measuring changes in the venous reservoir volume via a level sensor 309. If the clinician administers more volume from the IV bag (for example in response to a falling blood pressure as dictated by the clinical scenario), the simulator will respond with an appropriate increase in the algorithmically generated virtual value of central venous pressure (CVP) as well as an increase in blood pressure 320 resulting in an increase in algorithmically generated cardiac output and algorithmically generated mixed venous O2 saturation (SVO2). (See **Figure 12****,** bottom middle)

The HLM 110 and the ECMO machine 112, as well as the HIPEC machine 118, VAD machine 116, and aortic balloon pump 119, can be standard hospital equipment to which a patient would be coupled, e.g., by tubing that represents blood flow from the patient's artery and vein to the input and output of the Heart/Lung machine (HLM) and /or ECMO machines (ECMOM). No electrical connections are required between the patient simulators and the hospital machines in the present embodiment. However, in another embodiment, sensors can be placed on the patient module, e.g., to measure a patient's temperature, blood pressure, and blood O2 rate. The readouts from those sensors can be fed to diagnostic and therapeutic machines 103 or those mentioned in the next section, to provide input and feedback, and more realistically represent a patient's interaction with the machines. By replacing the patient with the patient module 101, different patient scenarios and responses can be presented to the clinician, with the clinician's input and changes being accurately represented therein. The hardware portion of the patient module 101 provides controlled temperature, fluid flow rates or blockages, modulated pressure, pressure spikes or pressure drops, and accurate volumetric representation of a human cardio pulmonary system via the uController 305 and/or the computing device 102 controlling the valves and pump in the patient module 101. The interaction of the software models and the hardware and measurement and metrics input to the software model to allow the simulation system to simulate patient treatments and responses. Some patient treatments are provided as virtual interfaces with the diagnostic/treatment machines, e.g., communicated on link 131 and displayed on patient monitor/delivery device 108 via computing device 102 software algorithm and model for the delivery of drugs, reaction to drugs, and contraindications, in response to an operator's selection of type of drug, quantity of drug, and rate of delivery. Other patient conditions such as activated clotting time (ACT), heparin resistance, and elevation of blood pressure, heart failure, and pathologies can be programmed with variety of degrees of cardiovascular disease and representative equipment malfunction, simulated ventilator performance for controlling O2 and CO2, while simulating the patient transition on or off the ECMO machine as would be done clinically.

The hydraulic portion of the patient module 101 simulates the blood flow between the ECMO machine 112 and the patient. That is, patient module 101, via an interactive system, pumps fluid (e.g., colored water to simulate blood) between patient module 101 and any of the therapeutic machine options 103. This simulation provides a more life-like representation of the interaction between the three primary interactions in patient treatment: i) between a patient and the ECMO or CPB machine, ii) between the operator and the patient, e.g., delivering drugs, and iii) between the operator and the ECMO machine, e.g., modifying controls of the ECMO machine. Thus, the present system provides a full bidirectional communication, interaction, and feedback between the three primary components of the system. Any combination or permutation of conditions and reactions between the three primary interactions can be provided as desired by the programming steps provided hereinafter.

Patient module 101 may be selectively operated in multiple modes, including a real mode or in a simulation mode. In the real mode, computing device 102 interacts with the patient module 101 to evaluate at least one fluid property measured and to provide a signal to the at least one control device disposed. In the simulated mode, no interaction exists between patient module 101 and computing device 102, with computing device 102 calculating all data for patient module 101. In a hybrid mode, the patient module 101 measures flow and volume, and models patient responses (with proprietary physiological models that simulate responses), but with no feedback, and no valves, that would measure the interaction with the ECMO machine 112. In this mode, the patient attributes can be modeled in the patient module 101, e.g., sicker patient, recovering patient, an acute condition or crashing patient. This baseline patient module 101 is a cost-effective tool for new trainees. Features can be manually performed on this baseline patient module 101, such as manually closing off a hose, to simulate a kink in the catheter.

However, as competence grows, a trainee should transition to another embodiment of the patient module 101 that does provide an output and does receive an input (feedback) that measures and receives changes to the patient module 101. This 'smart' ECMO patient module provides more life-like responses and interactions that would prepare a clinician for the complications that frequently arise in treating real patients.

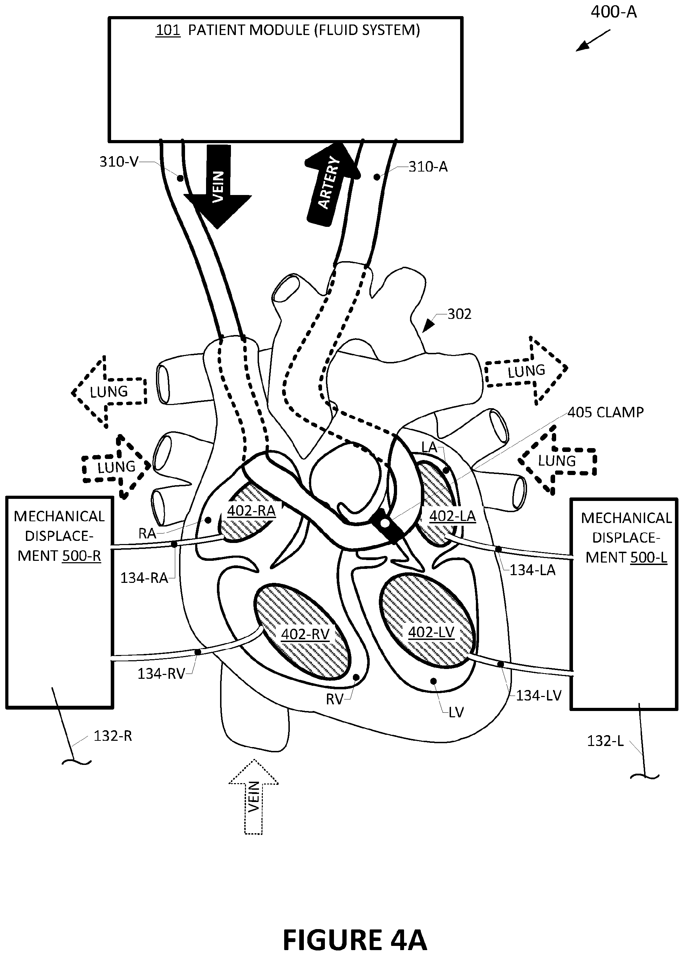

Referring now to **Figures 4A-4D****,** different embodiments are shown of a physical heart model with a physical simulated mechanical displacement and a physically accessible fluid flow, according to one or more embodiments. By providing a simulated physical heart model 302, the present disclosure provides a more realistic training scenario for the user/learner of therapeutic equipment. In each of **Figures 4A-4D****,** simulated physical heart model 302 can be a real heart from livestock such as swine or bovine, or it can be a rubber heart with the look, size, weight, and feel of a real human heart. Patient module 101 acts as a cardio pumping model supplying both volume and pressure of fluid, as well as optional timing properties of same, to simulated physical heart model 302. Mechanical displacement of one or more heart chambers (atriums and ventricles) is provided by either i) electrically-driven mechanical transducers inserted into one or more heart chambers; or ii) fluid bladders 402 inserted into one or more heart chambers and coupled to one or more mechanical displacement devices 500. Either the transducer or mechanical displacement devices are driven by computing device 102 in an algorithmic timing of expansion and contraction that matches a real human heart with specific health conditions or pathologies. The heart behavioral algorithms 263 (**Figure 2B****)** along with other patient algorithmic codes 262 for other systems (such as the pulmonary system, the broader cardiovascular system as a whole, as well as renal and hematological systems) are all provided to a clinical scenarios module 252 that also interacts with clinical scenarios database 256 for storing and retrieving data. This data is then executed on processor 202 and memory 206 of computing device 102 of **Figure 2A** (and **Figure 1B**) to drive mechanical displacement system 500 and cardio pumping system of patient module 101.

The result of the present solution is a holistic, coordinated, and programmable simulated training system of i) a patient module 101 providing a combination of physical and virtual simulated cardio fluid flow and performance; ii) a mechanical displacement devices 500 providing a combination of physical and virtual cardio movement; iii) one or more actual therapeutic devices 103 providing a combination of actual and virtual cardio therapeutic services; and iv) a patient monitor/delivery device 108 displaying all the aforementioned systems and their interaction in real-time formats that are derived from both virtual and actual measured performance data through which a user/learner and/or instructor to interface, control, and learn. Said differently, the current patient simulation and cardio simulation models provide a hybrid virtual/physical solution that combines the best of both worlds in that sufficiently realistic and accurate physical models are presented for viewing, holding, and procedural implementation (e.g., cannulation into the physical heart model for actual fluid flow to a therapeutic device) but that is not overly mechanically rigid and complicated to be too inflexible in varied applications and too costly for practical use. Complementing the sufficiently realistic and accurate physical model is an extensive virtual platform that combines the measured data from the physical simulation systems (pressure and flow data from patient simulator 101 in **Figure 3**) **with** algorithmically extrapolated data therefrom, algorithmically created data, and virtual clinical scenario information for the virtual patient and cardio models to create a mixed physical/virtual environment where the boundary between the virtually simulated data and the measured physical data is virtually undetectable to the user/leaner and instructor thereby presenting a sufficiently realistic experience on a patient monitor/delivery device. Thus, the present solution is a vast improvement over other attempted solutions that were rigidly tied to a physical-only solution, which were resultantly overly complicated and expensive in their attempt to physically model all aspects of cardio performance, and which were concomitantly rigid and inflexible in programmability of different modalities and pathologies and interface with a wide variety of different devices.

Referring now to first **Figure 4A**, a first embodiment 400-A is shown of mechanically displacing the simulated physical heart model 302 and of receiving a simulated fluid flow, according to one embodiment. Mechanical displacement is provided by four separate fluid bladders 402-RA, 402-RV, 402-LA and 402-LV for each of the four heart chambers, namely the right atrium, right ventricle, left atrium, and left ventricle, respectively. Motion is provided as described in subsequent **Figure 5** to simulate an actual beating heart tailored to each of a plurality of cardio pathologies and/or clinical scenarios for different therapeutic devices coupleable thereto. In the present embodiment, simulated physical fluid flow is routed through heart by entering the superior vena cava and looping through an opening created in the septum to exit the aorta. Optional clamp 405 can be partially or fully closed to represent an occlusion in the heart or in the blood vessels, or to provide a sealed fluid path of tubing, into which cannula needles or other instruments may be inserted for diagnostics or sampling purposes. Without a clamp, the heart can be used as a simulation of a beating heart outside of interaction with therapeutic devices.

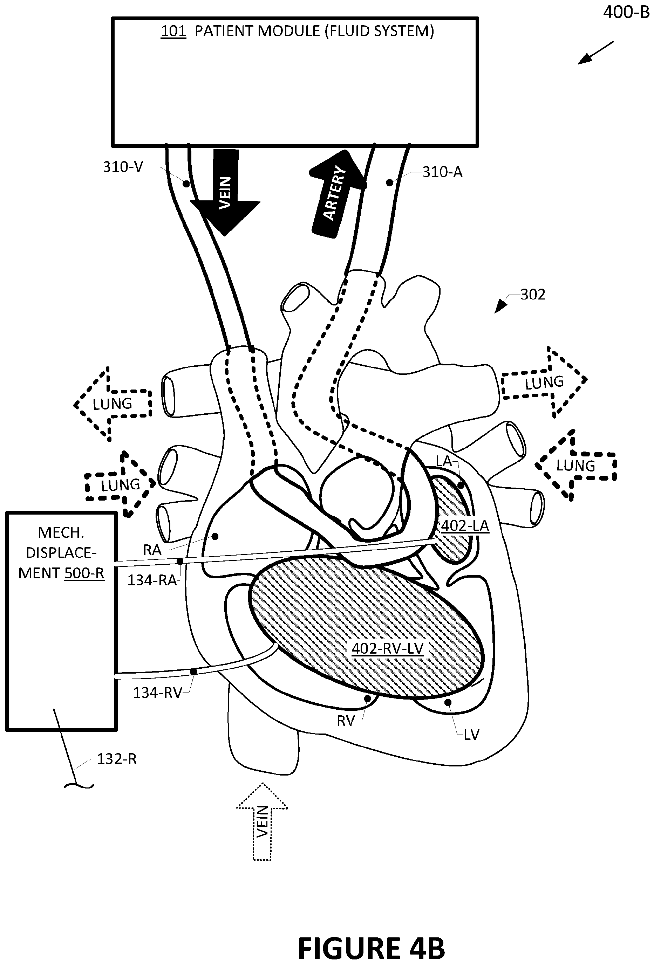

Referring now to **Figure 4B**, another embodiment 400-B is shown of mechanically displacing the simulated physical heart model 302 using only two bladders 402-RV-LV and 402-LA. This embodiment is a simplified and reduced cost implementation of mechanical displacement.

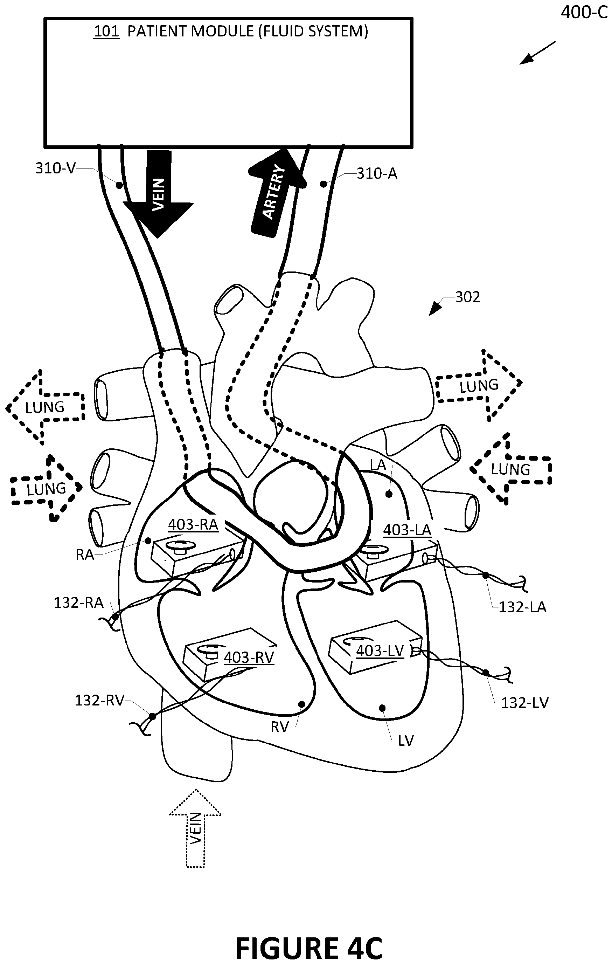

Referring now to **Figure 4C**, another embodiment 400-C is shown of mechanically displacing the simulated physical heart model 302 in all four of the heart chambers using electro-mechanical transducers (actuators) 403-RA, 403-RV, 403-LA, and 403-LV. This embodiment is a simplified and reduced-cost alternative to the fluid displacement bladders in the physical heart model. Fewer leakage issues, potentially more responsive and faster cycling time, and less of the more costly fluid hardware makes this embodiment a cleaner approach. Using easily routed wires 132-RA, 132-RV, 132-LA and 132-LV being coupled from simulated physical heart model 302 to computing device 102, as shown in **Figure 1B****.**

Referring now to the fourth and final of the series, **Figure 4D** shows a preferred embodiment 400-D of mechanically displacing the simulated physical heart model 302 in all four heart chambers using bladders similar to **Figure 4A****.** Unlike prior figures, the present **Figure 4D** severs the closed-circuit physically simulated fluid flow to create an open circuit. Input line 310-V enters the superior vena cava (SVC) and output line 310-A exits the ascending aorta of the beating heart model 302, both of which lines are sealed at the interface with the heart by suturing a band around the exterior of the blood vessels as shown by the necked down local compression in the blood vessel wall. The physically simulated fluid flow into the heart is sealed in the right atrium by suturing closed the tricuspid valve 420 located between the right atrium and the right ventricle. The open physically simulated fluid flow is then coupled back to the patient module 101 (fluid reservoir) by bypassing the heart via insertion of a cannula 406 into the right atrium to provide fluid flow out of pumping heart model 302 and into a desired therapeutic device 301, and by simulating insertion of a cannula 408 into the ascending aorta to provide fluid returning from the desired therapeutic device to the heart, and consequently completing the fluid circuit back to the patient module 101. This embodiment is also shown in **Figure 1B** with the chosen therapeutic device 103 coupled to the simulated beating heart 302 as being a heart lung machine (HLM).

In the final embodiment of **Figure 4D****,** a complete simulation experience exits for the simulated physical heart model with a therapeutic machine, whose performance results are simulated on the patient monitor/delivery device 108 (**Figures 1B** **and** **11**). All aforementioned **Figure 4** embodiments, namely **Figures 4A****,** **4B****, and** **4C** can all use this same implementation of an open loop physically simulated fluid flow with cannula coupling to therapeutic devices. The present **Figure 4D** is a preferred embodiment of implementing simulated physical heart model 302 with therapeutic devices as shown in: i) **Figure 1****,** where the beating heart model 302 is disposed between patient module 101 providing cardio fluid flow; ii) **Figure 2A**, where the beating heart model 302 is again disposed in series between patient module 101 and therapeutic devices 103; and iii) **Figure 3** where the beating heart model 302 is disposed in series between patient module 101 and the possible choices of therapeutic machines 103.

Referring now to **Figure 5****,** a mechanical motion system 500 is shown that creates mechanical motion (displacement) in chambers of a simulated physical heart model, according to one or more embodiments. Mechanical motion system includes a pressure source of an actuator 504 driving a piston 508 in a cylinder 510 to create fluid displacement conducted by fluid lines 134-LA and 134-LV coupled respectively to bladders 402-LA and 402-LV for the left atrium (LA) and left ventricle (LV). Using a single upstroke 502 or down stroke 501, the complementary nature of the double-acting cylinder pulls in fluid (low pressure) on one side of the piston 508, and pushes out fluid (high pressure) on the other side of piston 508 to actuate bladders on a given side of a heart model (left or right).

For example, in a systole part of the cardiac cycle when the left ventricle is contracting to pump blood through the aorta, piston 508 will actuate upward 502, to pull fluid into cylinder 510 via fluid line 134-LV, thereby collapsing bladder 402-LV, and thus giving the appearance that heart model 302 in **Figures 1B** **and** **4D****,** is actually performing a pumping action (when in reality, a pump in patient module 101 is providing the fluidic blood pressure and pumping action). During the noted operation of mechanical motion system 500, the other side of the piston 508 is compressing fluid out of cylinder 510 through fluid line 134-LA to enlarge bladder 402-LA, thus again giving the appearance that heart model 302 in **Figure 1B** **and** **4D****,** is again performing a pumping action. Another mechanical motion system 500-R exists for the right atrium and ventricle as well in the present embodiment, as shown in **Figure 1B****.**

Alternatively, a single mechanical motion system 500 can be used to supply less than four bladders in each of the four heart chambers. For example, **Figure 4B** provides only a single large right ventricle/left ventricle bladder (across a cut heart wall) to more crudely simulate heart motion with less accuracy, and a single left atrium bladder 402-LA. The present disclosure is well suited to a wide variety of mechanical actuation systems to create an impression of a live beating heart, whose actions are created separately and independently from a fluid pumping action provided by a separate and independent, though coupled for physiological accuracy.

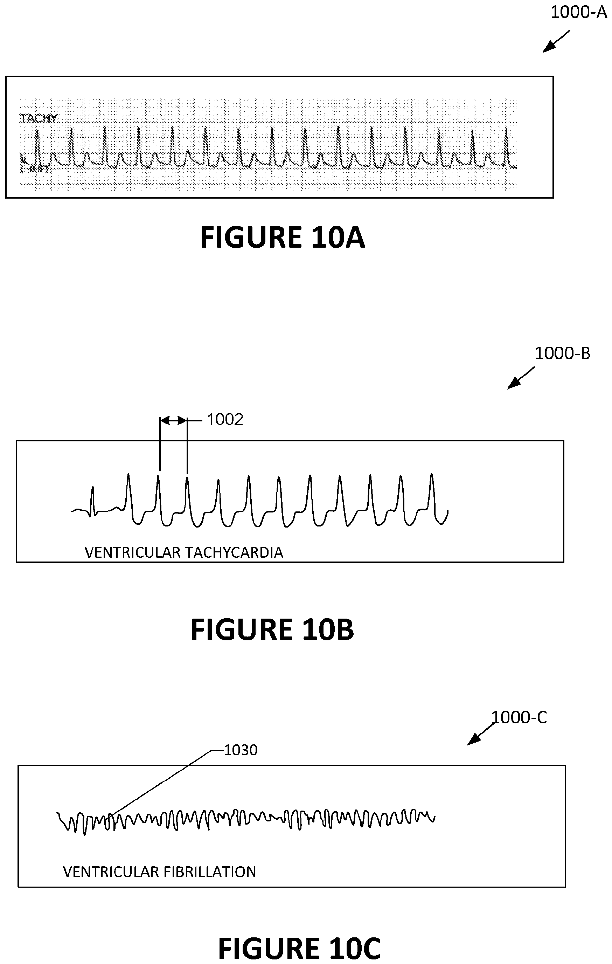

Mechanical motion system 500 avoids a problem with individual pumps for each heart chamber, which might not function reciprocally, as does the present disclosure, which has conservation of fluid for both bladders because the same distance of stroke and same volume of fluid is pumped for each of the atrium and ventricle bladder, albeit in different directions. A nominal stroke distance 512-A provides a nominal volume input and output from either end of cylinder 510. Additionally, mechanical motion system 500 is dynamically variable per the input on line 132-R from computing device 102. Consequently, mechanical motion system 500, with the appropriate input, can simulate a heart mechanical motion of a healthy heart, a ventricular tachycardia heart, a ventricular fibrillation heart, whose EKG patterns are illustrated in **Figures 10A, 10B, and 10C****,** respectively. For example, ventricular fibrillation EKG 1000-C shown in **Figure 10C****,** can be simulated in mechanical motion system 500 by oscillating piston 508 between random stroke position, e.g., from W1 to Y1, and then X1 to Z1, and then W1 to Z1, and so forth (such that the simulated beating heart model appears to wiggle like a so-called 'bag full of worms'). Virtually any heart behavior can be simulated by mechanical motion system 500, given the appropriate algorithm for driving actuator 504, specifying stroke distance, timing, duration, speed, frequency (heartbeat) via computing device 102. For example, an enlarged heart scenario is simulated by providing a baseline pressure to all bladders to enlarge them as the baseline enlarged heart product, with the stroke of the piston then only partially subtracting a pressure to create a relative heart contraction within the enlarged heart. Alternatively, all motion ceases for all bladders to simulate a cardiac arrest of the entire heart, or motion ceases only for a portion of the bladders in the chambers to represent a cardiopulmonary occlusion, cardiovascular blockage, or cardioembolic stroke of a respective portion of the heart. In the present embodiment, liquid fluid is utilized rather than gaseous fluid to drive the bladders 402 to provide faster response times, less damping, and crisper performance, all which result in a more realistic mechanical motion of the heart chambers.

Actuator 504 can be any controllable displacement device such as a stepper motor or a servo motor. And a whole alternative to a mechanical pumping solution for a mechanical motion system 500 is to provide localized electrical movements in heart chambers, as shown in **Figure 4C****,** with transducers (actuator) 403 energized by lead 132, as output by computing device 102 of **Figure 1B****,** per an algorithm associated with a clinical scenario or heart behavior.

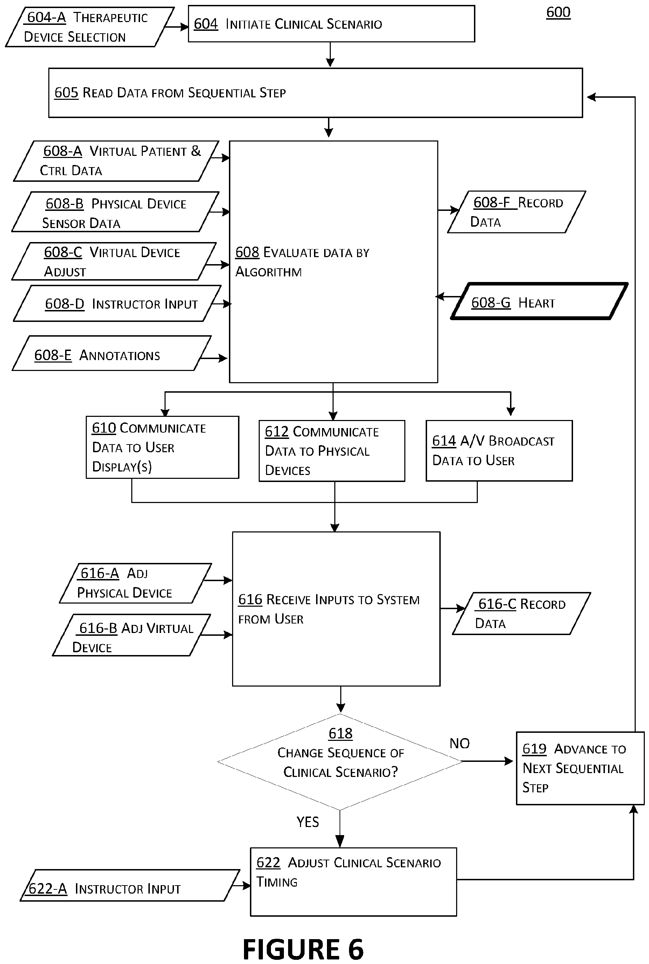

Referring now to **Figure 6****,** a flowchart 600 of a process simulating a patient interaction with a therapeutic machine is shown, according to one or more embodiments. Flowchart 600 is implemented on processor 202 and memory 206 of computing device 102 with relevant data communicated between patient module 101, patient monitor/delivery device 108, and computing device 102, as appropriate for the protocol. Flowchart 600 initiates a clinical scenario in operation 604, per input from instructor or clinician calling up an executable file from computing device 102 of **Figure 1B** and providing a therapeutic device selection input 604-A, e.g., an ECMO machine. If the simulation system 100 is operated in real mode, then an identified therapeutic device from the therapeutic device option set 103 is coupled to the patient module 101. Else, if the simulation system 100 is operated in simulation mode, the identified therapeutic device can either be coupled to the patient module 101, or not, since any physical device inputs are ignored, and the entire clinical scenario is executed in a virtual mode.

In operation 605, data is read from a sequential step of the electronic file, i.e., from all relevant fields, such as columns A through BD of a spreadsheet file, as described in the prior **Figure 6**. Operation 608 evaluates the data from the spreadsheet for the given sequential step. For example, spreadsheet columns relating sex, age, height, weight, body fluid and organ temperatures, urine output, and degree of lung disease, heart condition, or other pathology will be evaluated by one or more algorithms 262 of **Figure 2B** operating in the clinical scenario module 252, which is executed the processor 202 and memory 206 of computing device 102. Operation 608 also accepts input from many different sources, such as virtual patient and control data input 608-A, which is data the algorithm synthesizes internally from spreadsheet data that was just read. For example reading a patient data on heart conditions in one algorithm can then provide input to another algorithm, such as a cardio algorithm, that internally degrades a baseline related heart metric because of the given patient pathological conditions. Another input to the evaluation operation 608 is physical device sensor data 608-B, e.g. pressure and flow data sensed by microcontroller (ucontroller) 305 via A/D 303 in patient module 101 and communicated to computing device 102 via link 130, as shown in **Figures 1B** and 3. For example, while a given patient module might appear properly coupled to an ECMO machine for an ECMO simulation, the actual initiation of a transfer of fluid from patient module 101 to ECMO machine 112, might expose a flaw in the physical coupling of the tubing. This might lead to a change in measured performance, such as an incorrectly coupled port having a leak and thereby resulting in a drop of measured pressure 320 on input line 222 of **Figure 3A** that is then communicated to algorithm evaluation operation 608. Virtual device adjustment input 608-C can also be input to operation 608. This input can arise from an adjustment by the clinician ab initio or preemptively, i.e., before the simulation finishes evaluating the sequential step in the simulation system 100. Another input is instructor input 608-D, which can implement a wide range of control adjustments or timing, as described in **Figure 12**. Annotations input 608-E can be input to the system by instructor or clinician for noteworthy conditions, reactions, or performances. And finally an input 608-G provides heart condition input to the system, e.g., by instructor choosing a variable pathology or performance to be modeled by the simulated beating heart model, as manually input by display screen selection of LV and RV contractility 1204 and/or heart rate condition 1202 (**Figure 12**). An output of recording data 608-F can record any time-sampled rate of physical and virtual data, ranging from the equipment settings, to the simulated patent vital signs, along with annotations to capture the overall performance.

As the algorithms evaluate the input data provided in operation 608, that resulting output data is communicated to user displays in operation 610. For example, patient physiology and virtual control information, as discussed in **Figure 12****,** can be communicated to user display(s), e.g., to instructor on computing device 102, and to clinician via patient monitor/delivery device 108, of **Figure 1B****.** The clinician might receive data such as patient physiological conditions and optional simulated (virtual) physiological systems such as drug administration, (together "components"). The instructor display receives a more complete suite of information for control and testing purposes.

In parallel to information being passed to user displays, other information from the algorithm evaluation operation 608 is communicated to physical devices in operation 612. Algorithm outputs are provided on electrical, optical, or other mediums for lines 130 to physical control devices in patient module 101 (e.g., stepper valves 330, 332, 334, and B.P. pump 318) to set the simulated patient scenario for the clinician. Thus, if the patient being simulated by the patient module 101 is an overweight adult male with acute arterial sclerosis, a signal can be communicated to stepper valve 334 that will reduce its internal diameter significantly from what would otherwise be a normal diameter size for a healthy patient. Many other application specific scenarios can be presented in the data of the spreadsheet.

Another parallel branch of output from the algorithm evaluation operation 608 is operation 614 of communicating audio/visual (A/V) broadcast data to the user. For example, a text to speech instruction can be executed on a speaker system of patient monitor/ delivery device 108 to communicate a statement, order, question, or other interaction with the clinician/ operator. In another example, a video clip of a surgeon head-cam can begin playing at the time a step for initiating the HLM is given. Alternatively, a video or still picture of a clinical or diagnostic test, such as an angiogram, requested by the clinical scenario can be brought up.

Thus, with the multiple parallel branches for data output from the algorithmic evaluation operation 608, the system provides a near real-time experience for the clinician with many changes occurring at once. For operations or conditions that are meant to be serial, data can be provided for in subsequent steps in the spreadsheet. Alternatively, only one variable can be changed at a time, with all other variable in the spreadsheet remaining constant across multiple steps.

As the algorithm evaluates the data, and as the patient module 101 and the therapeutic devices begin to react, the simulation system will receive inputs in operation 616 from a user of the simulation system who has evaluated the situation and is reacting by changing settings on physical control devices or virtual control devices, as inputs 616-A and 616-B, respectively. Recording data operation 616-C can electronically store the inputs 616-A and 616-B along with the patient's physiological data, both from physical sensors and from virtually simulated vital signs for subsequent analysis and grading of the clinician.

In operation 618, an inquiry determines whether a change in the sequence of the clinical scenario is desired. If no change is desired, then operation 619 advances the clinical scenario to the next sequential step in the spreadsheet, and the flowchart 600 repeats, starting at operation 605 of reading of data from that next sequential step. If, however, the instructor does wish to adjust the timing of the clinical scenario, and then input 622-A from instructor can change clinical scenario timing in operation 622. The timing can be halted, accelerated, stepped forward in time, slowed down, sped up, or the clinical scenario could be canceled. This operation allows an instructor to input commands via instructor display 104 to processor 202 in computing device 102 for altering the timing. For example, an instructor may wish to advance to a step halfway through a given clinical scenario for focusing a clinician on a discrete operation. If the clinical scenario is not canceled by the instructor, then after operation, the clinical scenario advances to the next sequential step in the spreadsheet, and flowchart 600 repasts.

Once a clinical scenario has been completed or stopped, a different clinical scenario may be uploaded in software, and an entirely different scenario tested on the clinician. Alternatively, after a given clinical scenario has been completed or stopped, a therapeutic device coupled to the patient module 101 can be changed to a different therapeutic device in just minutes, and another clinical scenario for the new therapeutic device can be run on the same patient module 101 and computing device 102 equipment. Alternatively, the same patient physiological data can be reused on the new therapeutic machine, and thus offer a closely timed comparison of how different therapeutic machines will result in different vital signs and different long-term clinical course results.

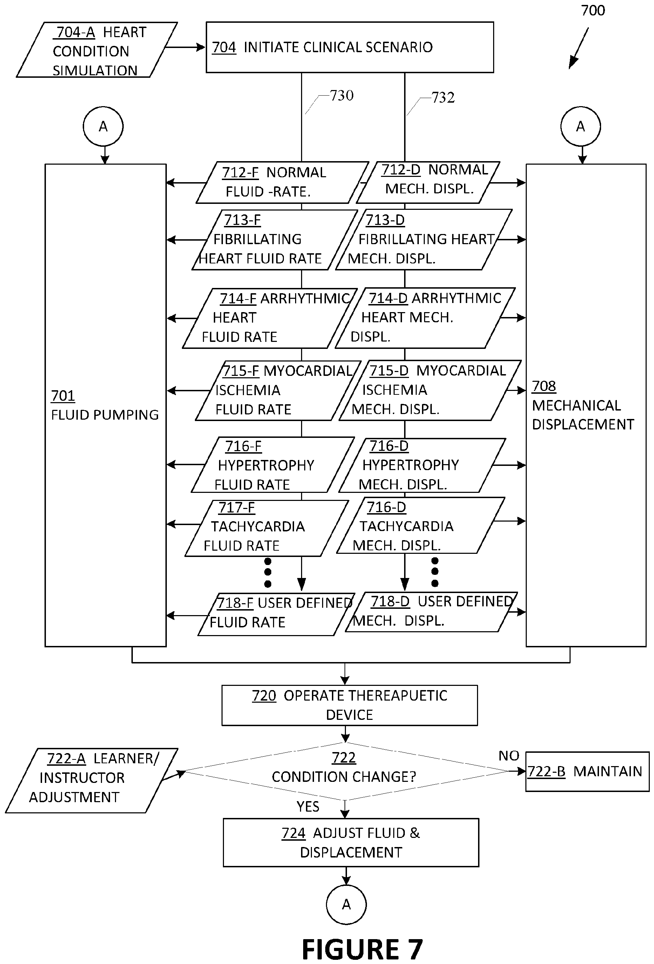

Referring now to **Figure 7**, a flowchart 700 is shown for operating a simulated beating heart system, according to one or more embodiments. To begin, a clinical scenario is chosen in operation 704, as previously described in operation 704 of flowchart 700 in **Figure** 7 for patient simulation system 100. A new operation 704-A of a heart condition is input to the clinical scenario operation 704. Any heart condition can be chosen that is within the program parameters of the present disclosure, i.e., with program code/algorithms 263 of **Figure 2B** that are disposed in memory 206 of computing device 102, or received externally therefrom via a network connection, Internet, or other reliable source.

For example, the following heart conditions can be simulated: i) normal (**Figure 10A**), ii) tachycardia (e.g., ventricular tachycardia in **Figure 10B**); iii) fibrillating heart (e.g., ventricular fibrillation in **Figure 10C**); and iv) arrhythmic, myocardial ischemia, hypertrophy, myocardial infarction; arterial sclerosis condition, (not shown), and any heart condition that can be characterized by an input of a) fluid pressures, rates, timing and other fluid properties; and b) heart muscle contraction rate, timing, duration, and other physical behavior. This data can be input in different spreadsheet table formats that completes the necessary data fields to be simulated, as shown in **Figure 6** for a portion of a simulation embodiment, e.g., where leftmost column for steps 1, 2, and 3 define a right ventricle (RV) contractility and left ventricle contractility of 100, 90, and 80 (same contractility for RV and LV in this embodiment, but different values and/or different from each other in other embodiments), and where EKG choices are defined or chosen as 0, 1, and 2 with heart rates of 100, 90, and 80 (respectively). Remaining parameters necessary for a functioning simulation are input in this same manner, though not shown in the present table for sake of brevity.

Still referring to **Figure 7**, after a clinical scenario with a heart condition is chosen, the appropriate model data is selected from the clinical scenarios database 256 of Figure 2B, which takes into account heart algorithms and conditions data 263 and other simulated patient algorithm and codes 262 to be presented in clinical scenarios module 252 as implemented in computing device 102. The resultant output is the appropriate aforementioned fluid model information and mechanical displacement information paired performance values (712-F/712-D normal, 713-F/713-D for fibrillating, 714-F/714-D for arrhythmic, 715-F/715-D for myocardial ischemia, 716-F/716-D for hypertrophy, 717-F/717-D for tachycardia, 718-F/718-D for user-defined condition, and other diagnostically valid scenarios) to simulate said heart condition and patient condition. For example, the clinical scenarios module 252 receives patient information (e.g., male, 49 years old, 185 pounds, triglyceride level of 80 MG/DL, an LDL cholesterol level of 140 MG/DL, a HDL cholesterol of 55 MG/DL, with no family history of heart disease, and only medication of a commonly used dosage of statin, and other relevant health information) and receives heart condition information (e.g., tachycardia under exertion exercises with slightly occluded coronary arteries) and merges the information together to provide a comprehensive patient model, with parameter tradeoffs, condition exacerbation, and contraindications (e.g., the spreadsheet table conditions). Optionally, a variable adjust module 254 (**Figure 2B**) allows an instructor to create a custom user-defined patient condition and/or a heart condition to something other than a selected pre-populated clinical scenario.

Output models of fluid pumping information and mechanical displacement information are communicated respectively to mechanical displacement operation 708 and fluid pumping operation 701, respectively, which are then implemented in hardware via mechanical displacement system 500 of **Figure 5** and patient module (fluid pumping) system 101 of **Figure 3****,** which together are shown in a holistic medical simulation system 100 of **Figure 1B****.**

Once the clinical scenario for patient module and heart simulator is implemented and working, one or more desired therapeutic device(s) 103 (**Figure 1B**) is/are implemented for the simulated patient in operation 720. If the conditions of the simulated patient change per inquiry 722, then operation 724 adjusts the fluid and displacement levels of the simulated systems. Changes can arise from a wide variety of sources, such as an improvement or degradation of the patient vitals and/or heart performance per the therapeutic device operation, and/or learner/instructor input 722-A to the therapeutic device and/or other patient condition or treatment such as medicine. For example, a learner of the patient and heart simulation system misadjusts or maladjusts a therapeutic device that degrades the heart performance (e.g., accidentally setting an unsatisfactory oxygenation level for an ECMO therapeutic device), then the computing device may respond by adjusting, as physiologically appropriate, the heart simulation system 400 and/or the patient simulation module 101, e.g., by increasing heart rate or contractions, and/or by decreasing fluid throughput, and/or changing contractility, stroke, or ventricular filling. The feedback to the computing device 102 to implement operation 720 is provided by internal algorithms that interpret the instruction I/O 216, the operator I/O 214, and/or the physical data 240-B from patient module 101, as shown in **Figure 2A**. If no condition change occurs with the simulation, then the operation of patient module and heart model is maintained 722-B. The algorithmic models implemented in patient module 101 will determine whether a homeostatic condition is an indication that the patient has responded acceptably, or an indication that the simulated patient is not responding positively to the therapeutic device, which can also be a warning sign to the learner of the therapeutic device. Implementation of flowchart 700 for a real-world condition of tachycardia is provided in **Figure 10C** below.

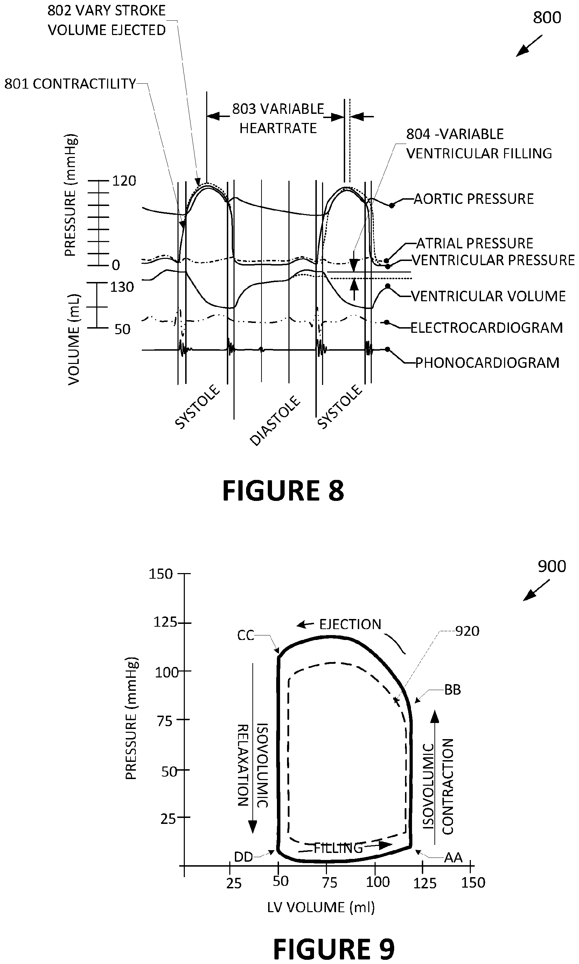

Referring now to **Figure 8****,** a graph is shown of a cardiac cycle 800 having variable parameters implemented by a heart simulation system, according to one or more embodiments. The holistic medical simulation system 100 (**Figure 1B**) coordinates via computing device 102, patient module 101 fluid flow (from pump therein) for beating heart model 302 with mechanical motion system 500 input of mechanical movement for pumping heart model 302 (from fluid/bladder 402 or transducers 403) to vary one or more of a plurality of parameters of cardiac cycle 800.

A first variable parameter is contractility 801 (as shown by steepness of aortic pressure curve at the beginning of a systole cycle) which represents the strength and vigor of the heart's contraction during systole. This first parameter is implemented either by physical fluid system (patient module 101) generating a strong volume/pressure performance per B.P. pump 318 in **Figure 3** per output O-4 and variable resistance SV 334 per output O-1, as controlled by algorithms implemented by computing device 102 at an appropriate time of a heart rate cycle, determined by the algorithm. Alternatively, computing device 102 can generate a virtual data signal 251-B per **Figure 2A** per the algorithm, that is simply displayed on patient monitor/delivery device 108, which is as good an indicator to the learner/use of the performance of therapeutic machine 103 of a simulated patient's health as it would be to simulate the exact pressures and volumes in the fluid system of patient module 101. Even if the patient module 101 generates only a reasonable pattern of pressure, volume, and/or timing of the patient's heart performance, with the patient monitor/delivery device 108, showing the theoretical calculated value of the patient's pressure, volume, and/or timing (and other vital statistics), then the purpose of the simulation is successful because the user/learner has both the precise calculated data plus the appearance of how the heart /patient would be acting under different clinical scenarios. The variable parameter of contractility 801 can also be simulated by mechanical motion apparatus 500 movement of the heart chamber(s) by varying a rate of fluid output from piston 508 movement per actuator 504 as signaled by algorithm 262 and/or clinical scenarios module 252 and executed by computing device 102 driving said actuator 504. By programmably and dynamically varying (during a clinical scenario) the signal generated by computing device, the subsequent strength and vigor of the piston displacement and apparent volume and pressure of the systole cycle is dynamically varied which in turn represents a dynamic strength and vigor of the simulated heart's contraction.

A second variable parameter controlled by holistic medical simulation system 100 is the stroke volume ejected 802 from the ventricle, as shown by the small dashed line portion of peak of the aortic pressure curve. Similar to the first variable parameter, the volume of simulated blood flow from the patient simulator 101 (via heart model 302), is either virtually represented on patient monitor/delivery device 108 or is physically generated by physical fluid system (patient module 101). In addition, similar to the first variable parameter, the mechanical motion of the heart chambers can be varied by controlling mechanical motion apparatus 500 that actuates the bladders 402 in the heart chambers.

A third variable parameter controlled by holistic medical simulation system 100 is the variable heart rate 803, as shown by the small dashed line delayed curve representation of ventricular pressure. Similar to the first variable parameter, the variable heart rate (simulated by frequency of pressure peaks of systole cycle of heart) can be physically generated by blood flow from the patient simulator 101 (through heart model 302) as controlled by computing device 102, and/or can be virtually represented on patient monitor/delivery device 108 by computing device 102. Even if the patient simulator 101 And similar to the first variable parameter, the mechanical motion of the heart chambers can be varied by controlling the frequency of strokes from mechanical motion apparatus 500 which actuates the bladders 402 in the heart chambers.

A fourth variable parameter controlled by holistic medical simulation system 100 is the variable ventricular filling 804, as shown by the small dashed line portion below the ventricular volume curve. Similar to the first variable parameter, the variable ventricular filling 101 (simulated by frequency of pressure peaks of systole cycle of heart) can be physically generated by blood flow from the patient simulator 101 (via heart model 302) as controlled by computing device 102, or can be virtually represented on patient monitor/delivery device 108 by computing device 102. And similar to the first variable parameter, the mechanical motion of the heart chambers can be varied by controlling the depth of strokes from mechanical motion apparatus 500 which actuates the bladders 402 in the heart chambers to simulate differ ventricular filling.

Besides these four variable parameters, the present disclosure is capable of simulating other variable parameters that are known in the field of cardiology and therapeutic device treatment.

Referring now to **Figure 9****,** a pressure-volume diagram 900 (aka, PV loop) of the four phases of a cardiac cycle, according to one or more embodiments. The purpose of illustrating the PV loop is to illustrate how holistic medical simulation system 100 coordinates patient module 101 fluid flow (from pump) for heart model 302 with mechanical motion system 500 input of mechanical movement for heart model 302 (from fluid/bladder 402 or transducers 403). By coordinating these two systems, a more realistic heart performance and visual appearance is created, thereby providing the learner of a diagnostic system, valuable lessons, judgment, and observational judgment in typical heart performance that will translate to real-world heart behavior of a live patient undergoing therapeutic treatment.

The four phases of the cardiac cycle are illustrated as left ventricular volume (LVV), left ventricular pressure (LVP), left atrium pressure (LAP) and aortic pressure (AoP) as a function of time (counterclockwise travel). The LVV and LVP are simultaneously plotted on noted axes scales of volume on the x-axis and pressure on the y-axis. The point of maximal volume and minimal pressure (i.e., the bottom right corner of the loop) corresponds to time AA, the onset of systole. During the first part of the cycle, pressure rises but volume stays the same (isovolumic contraction). Eventually, LVP rises above AoP, the aortic valve opens (BB), ejection begins and volume starts to go down. With this representation, AoP is not explicitly plotted; however, several features of AoP are readily obtained from the PV loop. After the ventricle reaches its maximum activated state (CC, upper left corner of PV loop), LVP falls below AoP, the aortic valve closes and isovolumic relaxation commences. Finally, filling begins with mitral valve opening (D, bottom left corner).

The present holistic medical simulation system 100 coordinates one or more systems of i) heartbeat pattern on patient monitor/delivery device 108; ii) patient module 101 fluid flow (from pump) for heart model 302; and iii) mechanical motion system 500 input of mechanical movement for heart model 302 such that contraction of the ventricle appears to be occurring while pressure being generated in the ventricle is increasing from point AA to point BB. These mechanical motion performance is generated either by transducer 403-LV in **Figure 10C** retracting and thus reducing ventricle size, or by actuator 504 moving piston 508 **in** **Figure 5** in upward direction 502, and pulling fluid into cylinder 510 via line 134-RV, thus reducing the size of bladder 402-LV of **Figure 10D.** Because pressure is not visually detectable in the heart, a virtual signal of pressure can be generated on the patient monitor/delivery device 108 for the learner of the system to correlate with the heart chamber movements. Optionally, patient module 101 fluid flow can be timed to provide a pressure curve from AA to BB and from BB to CC by electronically increasing variable fluid resistance SV 334 via output control O-1 and/or increasing B.P. pump pressure 318 via output control O-4, both shown in **Figure 3**. The reverse can occur from point CC to point DD. Algorithmic data generated in 262, and implemented in clinical scenarios module 252 in computing device 102 provides this flexibility, programmability, and coordination that hardware-only simulators have difficulty or inability simulating, and/or are not capable of being reprogrammed for variations of performance, e.g., a diseased heart that does not exhibit the ideal PV loop 1300. An exemplary modified cardiac cycle 920 is shown as modified per an instructors input to the instructor I/O 216 (Fig. 2) and implemented on instructor display 1200 **(****Figure 12****),** and specifically LV and RV contractility 1204, heart rate setting 1202, and stroke. An infinite quantity of different PV loops are possible, from instructor adjusting performance settings of the simulated beating heart and EKG performance on patient monitor/delivery device 108.

Subsequent **Figures 10A-10C** illustrate three exemplary ECG patterns currently programmed in the simulator system. There is no limit to the number of ECG patterns and lead configurations that can be made available to the instructor to increase the fidelity of a simulation experience or program.

Referring now to **Figure 10A****,** a normal ECG (fka EKG) trace 1000-A is shown of a healthy human heart to be simulated by the heart simulator, according to one or more embodiments. Specifically, lead I indicates a normal sinus rhythm (NSR). Trace 100-A can be implemented on simulated physical heart model, for purposes of providing a baseline heart behavior to a user/trainer of simulation system 100.

Referring now to **Figure 10B****,** an ECG trace 1000-B is shown of a heart in ventricular tachycardia to be simulated by the heart simulator, according to one or more embodiments.

Heart rate 1002 is above normal resting heart rate of 100 beats per minute (bpm), and is thusly classified as tachycardia. The present heart simulation system in combination with the patient simulation system 100 similarly simulates tachycardia by driving mechanical motion system 500 at a higher frequency and by creating an EKG pattern 1104 in **Figure 11** that appears the same as the pathological target EKG signal shown in **Figure 10B****.**

Referring now to **Figure 10C****,** an ECG (fka, EKG) trace 1000-C is shown of a heart in ventricular **fibrillation** to be simulated by the heart simulator, according to one or more embodiments. Note that there is no repetition per se of a given single heartbeat electrical signal. Rather, the shape, periodicity, and strength of each peak varies widely in this particular scenario from heartbeat to heartbeat. A database of EKG races from third parties, along with any diagnoses, can be stored in clinical scenarios database 256 (**Figure 2B**) stored either locally in memory 206 of computing device (**Figure 2A**), or in the Internet cloud, to provide an expert system combined with computer vision and/or and machine learning that can provide guidance for diagnostic analysis of a given EKG trace, as well as recommended therapeutic machines and settings for same that have yielded the best recovery.

An exemplary embodiment of the methodology of flowchart 700 of **Figure 7** is provided by evaluating the ventricular fibrillation heart condition shown in **Figure 10C****.** Specifically, heart electrical signal 1030 is simulated by a data file that reproduces signal 1030 on demand. The electrical signal 1030 is implemented in the present heart simulator system 100 and heart simulator apparatus 1000 by storing the digital signal waveform as a bit or vector file in memory 206 (Fig. 2A) of computing device 102 as shown in **Figures 1B** **and** **2A**, and/or as represented by heart algorithm 263 of **Figure 2B**. The signal is initiated either by i) instructor via instructor input/output (I/O) 216 function, e.g., computing device 102 ii) a given clinical scenario generated either as a random event, a pre-programmed event (Scenario table 1206 of **Figure 12**), or as shown in Fig. 3 iii) a reactionary event per a mis-treatment by the learner/operator of the therapeutic equipment 103, as detected in patient module 101 by sensors, e.g., pressure 320, flow 307, flow 306, and temp 308.

Still referring to heart signal 1030 of **Figure 10C** as implemented in **Figures 1B** **and** **2A**, virtual data 251-B of the signal 1030 is output via line 131 to be displayed on patient monitor/delivery device 108 along with potential physical data 240-C associated with performance of patient module 101, therapeutic device 103 either prior to, or based on of the implementation of the heart signal 1030. The physical data 240-C is data read by sensors in the system (patient module 101, heart model 302, therapeutic device 103, and other physical data.). Virtual data 251-B can also be data calculated by computing device 102 for algorithms based either wholly or in part, on the physical data, and on known relationships/formulas between metrics, vital signs, organ performance, pathology scenarios.

In parallel to outputting virtual data 251-B to patient monitor 108, computing device 102 also simultaneously outputs physical control data to a plurality of other devices/systems to recreate the different factors of a complete and holistic simulation, namely fluid performance, physical muscle performance, and patient vitals readout performance. Specifically computing device 102 outputs physical control data 242 to patient module 101 via physical control line 130 (Fig. 1) for fluid regulation (simulating blood flow) through heart model 302.

In response, patient module 101 drives at least one of blood pressure (B.P.) pump 318, proportioning valve (stepper valve or SV) 334, and other components therein to recreate approximately the same fluid through heart model 302 via venous line 310-V and arterial line 310-A. Thus, for the frequent, inconsistent, and shallow cardiac electrical signals exhibited by tachycardia heart electrical signal 1030, patient module 101 will generate the frequent, inconsistent, and shallow fluid pumping to therapeutic devices 103 to create a simulated heart model 302 that appears to actually be undergoing tachycardia.

Simultaneously, computing device 102 outputs physical control data 243 via physical control line 132 to mechanical motion apparatus 500 which generates the physical motion of heart model 302 (simulating muscle contraction). Specifically, **Figure** 5 shows that in response, mechanical motion apparatus 500 drives motor 504 and piston 508 to simulate the physical motion of the heart chambers via bladders 402, shown in **Figures 10** series. Thus, for the frequent, inconsistent, and shallow cardiac electrical signals exhibited by tachycardia heart electrical signal 1030, mechanical motion system 508 will generate the frequent, inconsistent, and shallow muscle contractions to create a simulated heart model 302 that visually appears to the learner of the system to actually be undergoing tachycardia.

Referring to **Figure 11****,** a screen shot 1100 of a learner interface displayed on the patient monitor/delivery device 108 in ECMO mode is shown according to one or more embodiments. Specifically, screen shot 1100 emulates a hemodynamic patent monitor. Section 1104 of the user interface presents the real time electrocardiogram pattern, lead configuration, and heart rate digital value. The balance of simulator system 100 interactively interfaces with the patient module 101, one or more diagnostic or patient therapeutic machine options 103, and simulated (virtual) physiological systems such as drug administration, (together "components") and the settings, operator changes to the settings, instructor changes, the components, responses from the components, in a single integrated system. Fluid is pumped between the ECMO machine 112 and the patient module 101 while flow rates and volumes are being measured for compliance to acceptable standards using flow meter 307 and volume level 309. Oxygenation generation and CO2 removal are simulated by computing device 102 for ECMO machine 112 using modeling algorithms that the operator can manipulate via the touch screen of the patient monitor/ delivery device 108. Real-time feedback, programmable patient parameters and scenario settings, instructor overrides and modifications provide a nearly indefinite number of testing scenarios through which competent technologists can be trained.

In particular, the simulator system can simulate blood clotting properties and three concurrent blood gasses (pre-Oxygenator, Post-oxygenator, and patient blood gasses, arterial and venous). It can provide full interaction between all four properties to track and model how a change in one or more properties will affect the other properties. It can also model how cardiovascular changes arise, and how pulmonary functions interact with a fluid pump in ECMO machine 112 and ventilator simulator and algorithmically defined patient condition provided by computing device 102. While a default set of algorithms are presented for simulation system 100 in the present embodiment, a user can programmably enter different algorithm formulas, weighting values, and settings for an alternative configuration.

An optional ancillary O.R. monitor (not shown), besides showing typical cardiovascular parameters, can also display any of several ancillary O.R. monitor functions such as the ACT machine, in-line blood gas monitors or outputs from various point of care (POC) devices such as blood gas analyzers or heparin management system (HMS) printouts. Which ancillary monitors are used and when they are visible during the case can all be controlled using simulator GUI via instructor display 104. Any of several different electrocardiogram (EKG) patterns can also be displayed including sequentially advancing to an arrest EKG pattern upon sensing adequate delivery of cardioplegia. Using a touch screen, the operator can administer drugs, print strip charts of lab data generated by the simulator, and make adjustments in gas flow and fraction of inspired oxygen (FIO2) of the CPB sweep gas.

### Controller Display

Referring now to-**Figure 12****,** a controller display 1200 is shown according to one or more embodiments. The instructor display 1200 (on screen 104 of computing device 102 of **Figure 1B**) serves as the "controller display" GUI to be used by the instructor or simulation operator. This panel allows the operator to manipulate various physiological parameters related to the patient, change the types of monitors displayed on the O.R. monitor screen as well as control the progress of the clinical scenario. Display 1200 allows the instructor to change the electrocardiogram pattern (502) from sinus rhythm (SR) to various patterns commonly experienced during surgical procedures and in the intensive care unit. Instructor can adjust variable LV and RV contractility settings 1204, heart rate scenario 1202, and scenario step 1206 to provide new and unique training situations for the simulated beating heart model.

The proprietary software of simulator system 100 is very customizable which allows the trainer to write custom clinical scenarios for the trainee. Examples of diagnostic and patient-servicing machines include blood pressure monitors, EKG monitors, ventilators, Activated Clotting Time (ACT in-line blood monitoring systems, pulse oximeters, spectrum variable input patient electronic record display, homeostasis management system (HMS), blood gas analyzer, and cerebral oximetry (NIRS). Inputs from these machines can be fed to the simulator CPU via data cable. Alternatively, the data can be communicated in a table format, e.g., in a spreadsheet format, that is usable by the system and software.

Data from any of the aforementioned sources can be modeled and presented on the display for the operator and instructors as an additional or alternative O.R. display parameter. For example, channels or parameters can be shown on the O.R. monitor for bispectral index "BSI" or thromboselastogram ("TEG"), and a variety of different Lab diagnostic printouts.

Patient specific factors (sex, height, weight), physiologic factors including left ventricle (LV) and right ventricle (RV) contractility, heart rate, pulmonary functions (pulmonary compliance, shunt fraction, dead space) depth of anesthesia and metabolic rate can all be specified through the scenario or by the controller display. By adjusting these factors, pre-existing co-morbidities can be simulated and actual patient physiology can be controlled according to temperature and drug load.

### Clinical Scenarios

Clinical scenarios in the present disclosure can be preloaded and called up and applied in a variety of timings, stop/start on command, printed out on a local device or stored on electronic or medical data storage devices, such as a USB drive, a network drive, or memory 206 of **Figure 2A**. Other clinical monitors and analyzers can be shown on the patient monitor/delivery device 108 and can be activated and utilized at the discretion of either the trainee or the instructor based on their input to the system. Additionally the clinical scenarios can also activate the various monitors, analyzers and other clinical devices. All three patient simulators are self-contained. They do not require additional devices such as the EKG machine or Blood Pressure Monitor.

### Absolute Mode

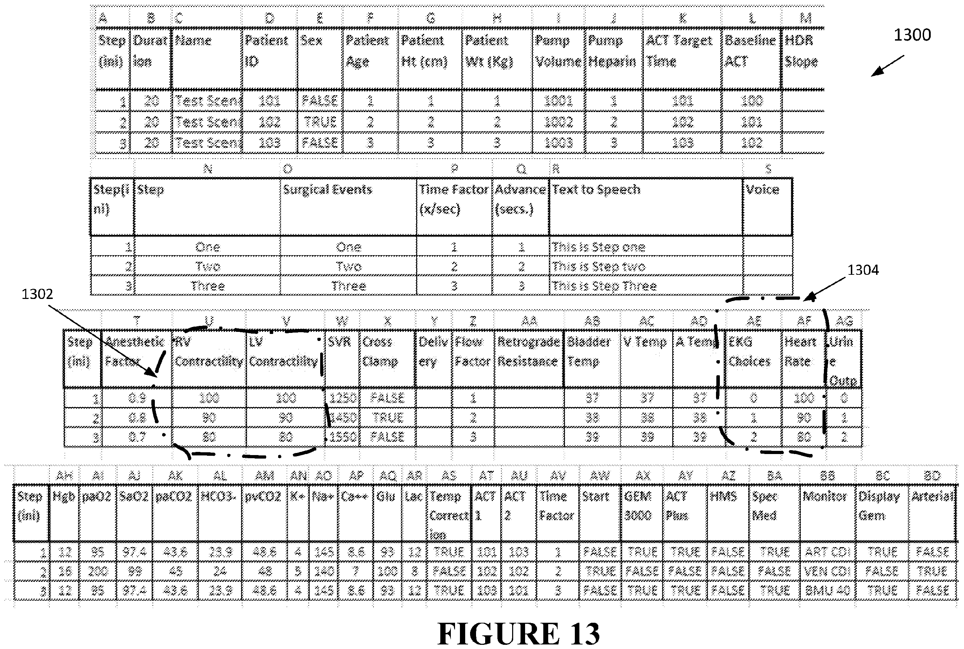

Referring to **Figure 13**, a clinical scenario spreadsheet 1300 is shown according to one or more embodiments. Spreadsheet 1300 is a sample of a scenario program that allows the instructor to program challenges to the learner with different ECG pattern choices and heart rate changes 1304. The instructor can alter the pattern and heart rate instantaneous (404) or program consistent reproducible situations in a scenario (1304). In addition, Clinical Scenarios can be written and loaded into the Simulator as a spreadsheet. Each column represents either a different control from the Controller display or a specific action to be performed. Each row defines a different step (Scenario Steps) that determines all of the settings and variables that define the patient and the patient monitoring choices. Below is a composite view of an actual spreadsheet used to program a clinical scenario composed of three steps illustrating the 56 individual variables that are manipulated by the simulator. Columns U and V for RV and LV contractility 1302 are shown along with columns AE and AF for EKG choices and heart rate values 1304.

The first three columns define the step number, name and the length of time (duration) that the simulator will wait before advancing to the next step. This information is then displayed on the drop-down table near the middle of the controllers screen (see **Figure 5A**) This scenario table along with the Scenario Progress bar and the green and red "GO" and "Stop" buttons below it are controls the operator can use to start and stop the automatic progression, jump to any other step and otherwise monitor the progress of the scenario.

The next five columns define the Patient ID, sex age height and weight. This information will be used by the computer models (algorithms) that will determine many of the physiological parameters and responses of the patient. The next five columns (I-M) are data used to define the "Heparin Sensitivity" of the patient and represent variables used to for the "Heparin Management System" (HMS). The display output for the HMS can be called up by the clinician using a button on the touch screen that will also be printed by the receipt printer. The "Surgical Events", column O, are entries that can be used to communicate with the clinician to indicate the progress of the surgery. This entry shows up at the top of the "O.R. monitor". The next two columns, P and Q are used to control the O.R. clock shown at the top left of a monitor. "Time Factor" dictates how fast the O.R. clock will move. For example, with an entry of 10, the O.R. clock will move ahead ten seconds every second. "Advance" is used to force the O.R. clock to jump ahead. The "Text to Speech" and "Voice" columns (R and S) will cause the simulator to talk, using one of three voices as determined by the "Voice" entry. Column T (Anesthetic Factor) allows the operator to adjust the depth of anesthesia for the patient. This will cause a change in the rate of metabolism for the patient that will in turn alter the rate of Oxygen consumption and CO2 production via the metabolic algorithms in the models.

Columns U through W adjust the cardiovascular health of the patient. Manipulations of these variables will show up as changes in the pressure waveforms (and pressure values) shown on the "O.R. monitor".

Surgical application of the aortic "cross clamp" can be initiated with a true entry in column X, causing the heart to stop ejecting blood and the blood pressure to fall (unless the heart lung machine operator is performing their task appropriately).

Columns Y, Z and AA control variables associated with "Cardioplegia" delivery (anesthetic for the heart). The simulator has flow sensors that will measure the delivery of cardioplegia from the heart lung machine. Column Y dictates whether the cardioplegia will enter the heart in an antegrade or retrograde (against the normal blood flow pattern). The flow factor (column Z) dictates the speed to which the heart will respond to the delivery. As cardioplegia is delivered, the EKG pattern will automatically cycle through 12 individual patterns ranging from a normal pattern to a flat line depending on the rate of the cardioplegia delivery. If the cardioplegia is being delivered retrograde, the CVP pressure trace (dashed bottom line in **Figure 4**) will automatically convert to a display of "coronary sinus pressure" indicating the driving pressure of the cardioplegia. The "Retrograde Resistance" column (AA) can then be used to indicate the resistance to flow, affecting the pressure displayed on the monitor.

The patient's bladder temperature and arterial and venous blood temperatures are dictated by columns AB, AC and AD. The choice of one of the twelve EKG patterns chosen, and the patient's heart rate are set by entries in columns AE and AF. The patient's accumulated urine output is control by column AG and the results are continuously displayed on the O.R. monitor. The next ten columns (AH-AR) represent lab results for various blood values. Some of these values are displayed on the on-line blood monitors. Some are used in the computer models to calculate secondary variables and some are displayed in the lab results print-out

The activated clotting time (ACT) analyzer is controlled by the next four columns (AT-AW). This ACT analyzer becomes visible by a true condition in column AY. ACT 1 and ACT 2 (columns AT and AU) dictate the resultant clotting time after the analysis is complete. The time factor allows the machine to advance faster than real time to allow it to move to completion without the need to wait the entire time for the result. A TRUE value in the start column (AW) will initiate the analysis.

The remaining nine columns determine which of the available monitors and analyzers will be visible on the O.R. monitor screen.

An entry of 'true' in column AX and BC will display the blood analyzer strip showing the results of the blood gas analysis. An entry of 'false' in the last column (BD) will display the results of the venous blood gas and 'true' will display the results for arterial blood. These results can be printed out on the receipt printer if the clinician presses the red button labeled 'call for blood gas' shown on the O.R. monitor.

In addition to pausing and restarting the scenario, the controller can change any one of the functions represented by columns in the programming spreadsheet. Each of these functions is represented by an individual control on the Controllers Display (see **Figure 5A**).

The controller also has the option of saving pertinent patient data in an "electronic medical record" of the case. Data relevant to the case can be stored in a separate spreadsheet that time stamps the data.

Comments from the controller can be entered during the case by typing into a data entry box in the middle of the Controllers Display and hitting the "Submit" button (see **Figure 12**).

### Calculated Mode

A patient monitor/ delivery device can be used in "Calculated Mode" (not shown) according to one or more embodiments. The major difference between the "Absolute Mode" and the "Calculated Mode" is that the "Calculated Mode" provides the ability for the simulator to calculate various blood gas parameters based on the actions of the clinical operator instead of dictating the values as described above. In the case of the Calculated Mode, a ventilator option is included on the patient monitor/ delivery device.

In calculated mode, the clinician can make the patient ventilator visible on the O.R. monitor screen (highlighted with the red circle) by touching the lower green button off to the far right labeled "Ventilator". "Pressure Mode" ventilation or "Volume Mode" ventilator options can be selected. The ventilator is operated by first touching the knob on the ventilator to activate it, and then turning the large thumb wheel in the far left bottom corner to adjust the parameter accordingly. All of the blood gases including pH and venous O2 saturation will respond accordingly based on the patient's size and temperature by means of the algorithm models in the simulator. In addition, variables for ventilating the artificial lung in either the heart lung machine or ECMO machine can be adjusted by means of the "Oxygenator Controls" (highlighted by the yellow circle) made visible by the upper green button to the far right. Changes in the "Oxy Sweep" (upper control) or "Oxygenator FIO2 (middle blue knob) will also change the patient's blood gases and pH depending on the blood flow rate being delivered by the heart lung machine or ECMO machine. Both the ventilator and machine oxygenator are working concomitantly, allowing the operator to adjust each independently. This makes it possible to challenge the clinician to determine whether the patient is well enough to allow termination of the extracorporeal blood support and therefore transition to the ventilator alone.

The spreadsheet used to load the scenario for the "Calculated Mode" has some differences from that described above for the "Absolute Mode". For the "Calculated Mode", the first difference is the inclusion of parameters describing the patient's lung disease. Dead space (S), Pulmonary Shunt Fraction (V), Airway Resistance (W) and Pulmonary Compliance (X), are variables that characterize the degree of lung disease suffered by the patient. Changes in any one of these parameters require a specific change in the adjustment of the ventilator and will have an effect on the blood gas results. Likewise, Oxygenator Shunt (T) defines the effectiveness of the artificial lung and together with Cannula Recirculation (U) will determine the impact of the heart lung or ECMO machine.

Another major difference in scenario parameters is the lack of any blood gases in the "Calculated Mode" scenario since these are all being calculated. Likewise, instead of dictating the patient's bladder temperature, the "Calculated Mode" relies on the temperature probe in the simulator reservoir for the value used in the algorithms and displayed on the O.R. monitor screen.

### Alternative Embodiments

References to methods, operations, processes, systems, and apparatuses disclosed herein that are implementable in any means for achieving various aspects, and may be executed in a form of a machine-readable medium, e.g., computer readable medium, embodying a set of instructions that, when executed by a machine (e.g., a processor in a computer, server, mobile device) to cause the machine to perform any of the operations or functions disclosed herein. Functions or operations may include receiving, measuring, communicating, altering, adjusting, transmitting, and the like.

The term "machine-readable" medium includes any medium that is capable of storing, encoding, and/or carrying a set of instructions for execution by the computer or machine and that causes the computer or machine to perform any one or more of the methodologies of the various embodiments. The "machine-readable medium" shall accordingly be taken to include, but not limited to, solid-state memories, optical and magnetic media, compact disc and any other storage device that can retain or store the instructions and information, e.g., only non-transitory tangible medium. The present disclosure is capable of implementing methods and processes described herein using transitory signals as well, e.g., electrical, optical, and other signals in any format and protocol that convey the instructions, algorithms, and data to implement the present processes and methods.

Exemplary computing systems, such as a personal computer, minicomputer, mainframe, and server that are capable of executing instructions to accomplish any of the functions described herein include components such as a processor, e.g., single or multi-processor core, for processing data and instructions, coupled to memory for storing information, data, and instructions, where the memory can be computer usable volatile memory, e.g. random access memory (RAM), and/or computer usable non-volatile memory , e.g. read only memory (ROM), and/or data storage, e.g., a magnetic or optical disk and disk drive). Computing system also includes optional inputs, such as alphanumeric input device including alphanumeric and function keys, or cursor control device for communicating user input information and command selections to processor, an optional display device coupled to bus for displaying information, an optional input/output (I/O) device for coupling system with external entities, such as a modem for enabling wired or wireless communications between system and an external network such as, but not limited to, the Internet. Coupling of components can be accomplished by any method that communicates information, e.g., wired or wireless connections, electrical or optical, address/data bus or lines.

The computing system is only one example of a suitable computing environment and is not intended to suggest any limitation as to the scope of use or functionality of the present technology. Neither should the computing environment be interpreted as having any dependency or requirement relating to any one or combination of components illustrated in the exemplary computing system. The present technology may be described in the general context of computer-executable instructions, such as program modules, being executed by a computer. Generally, program modules include routines, programs, objects, components, data structures, etc., that perform particular tasks or implement particular abstract data types. The present technology may also be practiced in distributed computing environments where tasks are performed by remote processing devices that are linked through a communications network. In a distributed computing environment, program modules may be located in both local and remote computer-storage media including memory-storage devices.

Methods and operations described herein can be in different sequences than the exemplary ones described herein, e.g., in a different order. Thus, one or more additional new operations may be inserted within the existing operations or one or more operations may be abbreviated or eliminated, according to a given application, so long as substantially the same function, way and result is obtained

Although the present embodiments have been described with reference to specific example embodiments, it will be evident that various modifications and changes may be made to these embodiments without departing from the scope of the various embodiments.

The foregoing descriptions of specific embodiments of the present disclosure have been presented for purposes of illustration and description. They are not intended to be exhaustive or to limit the invention to the precise forms disclosed. Many modifications and variations are possible in light of the above teaching without departing from the scope of the various embodiments. The embodiments were chosen and described in order to explain the principles of the invention and its practical application best, to enable others skilled in the art to best utilize the invention and various embodiments with various modifications as are suited to the particular use contemplated. It is intended that the scope of the invention be defined by the Claims appended hereto and their equivalents.

## Claims

1. A medical simulation system (10) comprising:
a fluid pumping system (101) for pumping fluid to a physical heart model (302) with a shape and appearance of a human heart in order to simulate pressurized pulsating blood pressure of the physical heart model;
an input (240-A) from at least one of i) an extracorporeal therapeutic device (11) and/or ii) a drug delivery system; and
a computing device (102) coupled to the fluid pumping system; and wherein:
the computing device comprises a processor (202) and a memory (206) coupled to each other to execute instructions;
the computing device interacts with the physical heart model by generating and communicating at least one simulated heart signal (20, 132-L, 132-R);
the physical heart model responds dynamically to simulate a beating motion (708) of a live heart based on the simulated heart signal; and
a reflexive action is simulated by generating at least one simulated heart signal and/or a displayed virtual data based on an algorithm using the input from the at least one of i) the extracorporeal therapeutic device and/or ii) the drug delivery system.

2. The medical simulation system of claim 1 further comprising:
a heart simulation system (12) coupled to the fluid pumping system, the heart simulation system comprising: the physical heart model with the shape and appearance of the human heart;
a mechanical displacement unit (18, 500, 403) for mechanically displacing at least a portion of the physical heart model; a fluid line (14, 260) coupled to the physical heart model; and wherein:
the heart simulation system receives the at least one simulated heart signal;
the fluid line communicates pumped fluid to the physical heart model to simulate a fluid displacement rate of a live heart;
the mechanical displacement unit for mechanically displacing at least a portion of the physical heart model is configured to simulate a beating motion of the live heart; and
a pulse of the pressurized pulsating blood pressure fluid is synchronized with a matching beating motion of a heart rate.

3. The medical simulation system of claim 2 wherein:
the computing device changes the simulated heart signal over time per changes arising from another system;
the heart simulation system reacts over time to the change in the simulated heart signal by making a change to the mechanical displacement unit for mechanically displacing the physical heart model with a shape and appearance of a human heart; and
the medical simulation system is configured to reflexively alter at least one of a blood volume or a blood pressure in the fluid line in response to a change in another system.

4. The medical simulation system of claim 2, wherein:
the mechanical displacement unit for mechanically displacing a physical heart model with a shape and appearance of a human heart in the heart simulation system is responsive to the at least one simulated heart signal from the computing device; and the at least one simulated heart signal simulates at least one pathological condition of:
a fibrillating heart rate;
an arrhythmic heart rate;
a myocardial ischemia;
a cardiovascular aneurism;
a hypertrophy condition;
a tachycardia condition;
an enlarged heart; and
an arterial sclerosis condition.

5. The medical simulation system of claim 1 further comprising:
a patient display/delivery device coupled to the computing device, the patient display/delivery device including an operator-input interface for selecting at least one operator-chosen variable of a clinical scenario and a selectable setting of at least one therapeutic machine; and wherein:
the computing device is coupled to the patient display/delivery device to receive the at least one operator-chosen variable; and the computing device generates the simulated heart signal for the mechanical displacement of the physical heart model with the shape and appearance of the human heart based at least in part on the operator-chosen variable.

6. The medical simulation system of claim 2 further comprising:
an instructor display coupled to the computing device, the instructor display including an instructor-input interface for adjusting at least one instructor-chosen variable of a clinical scenario, a condition metric of the heart simulation system, and a performance metric of at least one therapeutic machine; and wherein:
the computing device is coupled to the instructor display to receive the at least one instructor-chosen variable; and
the computing device generates the simulated heart signal for the mechanical displacement of the physical heart model with the shape and appearance of the human heart based at least in part on the instructor-chosen variable.

7. The medical simulation system of claim 2 wherein:
the at least one simulated heart signal generated for the heart simulation system includes at least one of a displacement profile signal for an extension stroke, a displacement profile signal for a retraction stroke, and a frequency; and
the heart simulation apparatus is programmable to accommodate a wide variety of clinical scenarios and equipment changes.

8. The medical simulation system of claim 2 wherein:
the fluid line receives a pressurized fluid via to the physical heart model to simulate a fluid displacement of a live heart;
and
the computing device further executes the following instructions:
calculating, via the computing device, a simulated heart signal for the heart simulation system, including at least one of a blood pressure, a blood volume, and a heart rate;
communicating the simulated heart signal to the heart simulation system; and
operating the heart simulation system per the simulated heart signal in order to simulate a physiological response of mechanical motion in a physical heart model having a shape and appearance of a human heart therein, to the at least one input.

9. The medical simulation system of claim 1, wherein:
the computing device further executes the following instructions:
changing the simulated heart signal over time per changes arising in another system;
the heart simulation system reacts to the change in the simulated heart signal; and
the another system includes at least one of a cardiovascular system, a respiratory system, a hematological system, a renal system, a gas exchange system by an artificial lung system, and a drug interaction system.

10. The medical simulation system of claim 2, wherein:
the computing device further executes the following instructions:
interacting the heart simulation system with the at least one of i) the extracorporeal therapeutic device and/or ii) the drug delivery system;
operating the fluid pump at a reduced performance level scenario that simulates a diseased heart; and
algorithmically creating and displaying data from a cardio model to create a mixed physical/virtual environment including at least a calculated data of central venous pressure (CVP).

11. The medical simulation system of claim 2, wherein:
the fluid line pulsates a blood pressure that matches a beating motion of the patient heart rate.

12. The medical simulation system of claim 3, wherein:
the another system includes at least one of a cardiovascular system, a respiratory system, a hematological system, a renal system, a gas exchange system by an artificial lung system, and a drug interaction system.

13. The medical simulation system of claim 1, wherein:
the computing device further executes the following instructions:
interacting via at least one of: i) virtual interfaces with displays and controls using algorithms or models; or ii) simulated in representative equipment.

14. The medical simulation system of claim 1, wherein:
the system provides at least one of i) bidirectional communication; ii) interaction; and/or iii) feedback received from simulated patient, extracorporeal therapeutic machine, operator, and an operator of the system.

15. A method of operating a medical simulation system including a heart simulation system with a physical heart model that is coupled to a computing device and to an input interface, the method comprising:
calculating, via the computing device, a simulated heart signal for the heart simulation system, including at least one of a blood pressure, a blood volume, and a heart rate;
communicating the simulated heart signal to the heart simulation apparatus;
operating the heart simulation apparatus per the simulated heart signal in order to simulate a physiological response of mechanical motion in a physical heart model having a shape and appearance of a human heart therein, to the at least one input;
receiving a pressurized fluid via a fluid line to the physical heart model to simulate a fluid displacement of a live heart;
simulating a reflexive action of the heart simulation system by generating at least one simulated heart signal and/or a displayed virtual data based on an algorithm using the input from the at least one of i) the extracorporeal therapeutic device and/or ii) the drug delivery system; and
synchronizing a pulse of the pressurized fluid that matches a beating motion of the patient heart rate.

## Patentansprüche

1. Medizinisches Simulationssystem (10), umfassend:
ein Flüssigkeitspumpsystem (101) zum Pumpen von Fluid zu einem physischen Herzmodell (302), das die Form und das Aussehen eines menschlichen Herzens aufweist, um den pulsierenden Blutdruck des physischen Herzmodells zu simulieren;
eine Eingabe (240-A) von zumindest einer von i) einer extrakorporalen therapeutischen Vorrichtung (11) und/oder ii) einem Arzneimittelabgabesystem; und
ein Computergerät (102), das mit dem Flüssigkeitspumpsystem gekoppelt ist; und wobei:
das Computergerät einen Prozessor (202) und einen Speicher (206) umfasst, die miteinander gekoppelt sind, um Anweisungen auszuführen;
das Computergerät mit dem physischen Herzmodell interagiert, indem es zumindest ein simuliertes Herzsignal (20, 132-L, 132-R) erzeugt und überträgt;
das physische Herzmodell dynamisch reagiert, um basierend auf dem simulierten Herzsignal eine schlagende Bewegung (708) eines lebenden Herzens zu simulieren; und
eine reflexive Aktion durch Erzeugen zumindest eines simulierten Herzsignals und/oder angezeigter virtueller Daten basierend auf einem Algorithmus unter Nutzung der Eingaben von zumindest einem von i) der extrakorporalen therapeutischen Vorrichtung und/oder ii) dem Arzneimittelabgabesystem simuliert wird.

2. Medizinisches Simulationssystem nach Anspruch 1, ferner umfassend:
ein Herzsimulationssystem (12), das mit dem Flüssigkeitspumpsystem gekoppelt ist, das Herzsimulationssystem umfassend: das physische Herzmodell mit der Form und dem Aussehen des menschlichen Herzens;
eine mechanische Verschiebungseinheit (18, 500, 403) zum mechanischen Verschieben zumindest eines Teils des physischen Herzmodells; eine Flüssigkeitsleitung (14, 260), die mit dem physischen Herzmodell gekoppelt ist; und wobei:
das Herzsimulationssystem das zumindest eine simulierte Herzsignal empfängt;
die Flüssigkeitsleitung die gepumpte Flüssigkeit an das physische Herzmodell weiterleitet, um eine Flüssigkeitsverschiebungsrate eines lebenden Herzens zu simulieren;
die mechanische Verschiebungseinheit zum mechanischen Verschieben zumindest eines Teils des physischen Herzmodells konfiguriert ist, um eine schlagende Bewegung des lebenden Herzens zu simulieren; und
ein Puls der unter Druck stehenden pulsierenden Blutdruckflüssigkeit mit einer übereinstimmenden schlagenden Bewegung einer Herzfrequenz synchronisiert ist.

3. Medizinisches Simulationssystem nach Anspruch 2, wobei:
das Computergerät das simulierte Herzsignal im Verlauf der Zeit durch Änderungen von einem anderen System aus ändert;
das Herzsimulationssystem im Verlauf der Zeit auf die Änderung des simulierten Herzsignals reagiert, indem es eine Änderung an der mechanischen Verschiebungseinheit vornimmt, um das physische Herzmodell mechanisch zu verschieben, das die Form und das Aussehen eines menschlichen Herzens aufweist; und
das medizinische Simulationssystem konfiguriert ist, um zumindest eines von einem Blutvolumen oder einem Blutdruck in der Fluidleitung in Reaktion auf eine Änderung in einem anderen System reflexiv zu ändern.

4. Medizinisches Simulationssystem nach Anspruch 2, wobei:
die mechanische Verschiebungseinheit zum mechanischen Verschieben eines physischen Herzmodells mit der Form und dem Aussehen eines menschlichen Herzens in dem Herzsimulationssystem auf das zumindest eine simulierte Herzsignal von dem Computergerät reagiert; und das zumindest eine simulierte Herzsignal zumindest einen pathologischen Zustand simuliert von:
einer fibrillierenden Herzfrequenz;
einer arrhythmischen Herzfrequenz;
einer myokardialen Ischämie;
einem kardiovaskulären Aneurysma;
einem hypertrophischen Zustand;
einem tachykarden Zustand;
einem vergrößerten Herzen; und
einer arteriellen Sklerose.

5. Medizinisches Simulationssystem nach Anspruch 1, ferner umfassend:
eine mit dem Computergerät gekoppelte Patientenanzeige-/- abgabevorrichtung, wobei die Patientenanzeige-/- abgabevorrichtung eine Bediener-Eingabeschnittstelle zum Auswählen von zumindest einer vom Bediener ausgewählten Variablen eines klinischen Szenarios und einer auswählbaren Einstellung von zumindest einer therapeutischen Maschine beinhaltet; und wobei:
das Computergerät mit der Patientenanzeige/- abgabevorrichtung gekoppelt ist, um die zumindest eine vom Bediener ausgewählte Variable zu empfangen; und das Computergerät das simulierte Herzsignal für die mechanische Verschiebung des physischen Herzmodells mit der Form und dem Aussehen des menschlichen Herzens basierend zumindest teilweise auf der vom Bediener ausgewählten Variable erzeugt.

6. Medizinisches Simulationssystem nach Anspruch 2, ferner umfassend:
eine Ausbilderanzeige, die mit dem Computersystem gekoppelt ist, wobei die Ausbilderanzeige eine Ausbilder-Eingabeschnittstelle zum Anpassen von zumindest einer vom Ausbilder ausgewählten Variablen eines klinischen Szenarios, einer Zustandsmetrik des Herzsimulationssystems und einer Leistungsmetrik von zumindest einer Therapiemaschine beinhaltet; und wobei:
das Computergerät mit der Ausbilderanzeige gekoppelt ist, um die zumindest eine vom Ausbilder ausgewählte Variable zu empfangen; und
das Computergerät das simulierte Herzsignal für die mechanische Verschiebung des physischen Herzmodells mit der Form und dem Aussehen des menschlichen Herzens zumindest teilweise basierend auf der vom Ausbilder ausgewählten Variable erzeugt.

7. Medizinisches Simulationssystem nach Anspruch 2, wobei:
das zumindest eine für das Herzsimulationssystem erzeugte simulierte Herzsignal zumindest eines von einem Verschiebungsprofilsignal für einen Verlängerungshub, einem Verschiebungsprofilsignal für einen Rückzugshub und eine Frequenz beinhaltet; und
die Herzsimulationsvorrichtung programmierbar ist, um eine Vielzahl von klinischen Szenarien und Geräteänderungen zu ermöglichen.

8. Medizinisches Simulationssystem nach Anspruch 2, wobei:
die Flüssigkeitsleitung eine unter Druck stehende Flüssigkeit über das physische Herzmodell empfängt, um eine Flüssigkeitsverdrängung eines lebenden Herzens zu simulieren;
und
das Computergerät ferner die folgenden Anweisungen ausführt:
Berechnen, über das Computergerät, eines simulierten Herzsignals für das Herzsimulationssystem, das zumindest eines von einem Blutdruck, einem Blutvolumen und einer Herzfrequenz beinhaltet;
Übermitteln des simulierten Herzsignals an das Herzsimulationssystem; und
Betreiben des Herzsimulationssystems durch das simulierte Herzsignal, um eine physiologische Reaktion der mechanischen Bewegung in einem physischen Herzmodell, das eine Form und ein Aussehen eines menschlichen Herzens darin aufweist, auf die zumindest eine Eingabe zu simulieren.

9. Medizinisches Simulationssystem nach Anspruch 1, wobei:
das Computergerät ferner die folgenden Anweisungen ausführt:
Ändern des simulierten Herzsignals im Verlauf der Zeit durch Änderungen, die in einem anderen System auftreten;
wobei das Herzsimulationssystem auf die Änderung des simulierten Herzsignals reagiert; und
das andere System zumindest eines von einem kardiovaskulären System, einem Atmungssystem, einem hämatologischen System, einem Nierensystem, einem System für den Gasaustausch durch ein künstliches Lungensystem und einem System für Wechselwirkungen des Arzneimittels beinhaltet.

10. Medizinisches Simulationssystem nach Anspruch 2, wobei:
das Computergerät ferner die folgenden Anweisungen ausführt:
Interaktion des Herzsimulationssystems mit zumindest einem von i) der extrakorporalen therapeutischen Vorrichtung und/oder ii) dem Arzneimittelabgabesystem;
Betreiben der Flüssigkeitspumpe auf einem reduzierten Leistungsniveau in einem Szenario, das ein krankes Herz simuliert; und
algorithmisches Erstellen und Anzeigen von Daten aus einem Herz-Kreislauf-Modell, um eine gemischte physische/virtuelle Umgebung zu schaffen, die zumindest berechnete Daten des zentralen Venendrucks (CVP) beinhaltet.

11. Medizinisches Simulationssystem nach Anspruch 2, wobei:
die Flüssigkeitsleitung einen Blutdruck pulsiert, der mit einer schlagenden Bewegung der Herzfrequenz des Patienten übereinstimmt.

12. Medizinisches Simulationssystem nach Anspruch 3, wobei:
das andere System zumindest eines von einem kardiovaskulären System, einem Atmungssystem, einem hämatologischen System, einem Nierensystem, einem System für den Gasaustausch durch ein künstliches Lungensystem und einem System für Wechselwirkungen des Arzneimittels beinhaltet.

13. Medizinisches Simulationssystem nach Anspruch 1, wobei:
das Computergerät ferner die folgenden Anweisungen ausführt:
Interaktion über zumindest eines von: i) virtuellen Schnittstellen mit Anzeigen und Steuerungen unter Nutzung von Algorithmen oder Modellen; oder ii) Simulationen in repräsentativen Geräten.

14. Medizinisches Simulationssystem nach Anspruch 1, wobei:
das System zumindest eines von i) bidirektionaler Kommunikation, ii) Interaktion und/oder iii) Rückmeldung bereitstellt, das vom simulierten Patienten, der extrakorporalen Therapiemaschine, dem Bediener und einem Bediener des Systems empfangen wird.

15. Verfahren zum Betreiben eines medizinischen Simulationssystems, das ein Herzsimulationssystem mit einem physischen Herzmodell beinhaltet, das mit einem Computergerät und mit einer Eingabeschnittstelle gekoppelt ist, wobei das Verfahren umfasst:
Berechnen, über das Computergerät, eines simulierten Herzsignals für das Herzsimulationssystem, das zumindest eines von einem Blutdruck, einem Blutvolumen und einer Herzfrequenz beinhaltet;
Übermitteln des simulierten Herzsignals an die Herzsimulationsvorrichtung;
Betreiben der Herzsimulationsvorrichtung durch das simulierte Herzsignal, um eine physiologische Reaktion der mechanischen Bewegung in einem physischen Herzmodell, das eine Form und ein Aussehen eines menschlichen Herzens darin aufweist, auf die zumindest eine Eingabe zu simulieren;
Empfangen einer unter Druck stehenden Flüssigkeit über eine Flüssigkeitsleitung zum physischen Herzmodell, um eine Flüssigkeitsverdrängung eines lebenden Herzens zu simulieren;
Simulieren einer reflexiven Aktion des Herzsimulationssystems durch Erzeugen zumindest eines simulierten Herzsignals und/oder angezeigter virtueller Daten basierend auf einem Algorithmus unter Nutzung der Eingabe von zumindest einem von i) der extrakorporalen therapeutischen Vorrichtung und/oder ii) dem Arzneimittelabgabesystem; und
Synchronisieren eines Pulses der unter Druck stehenden Flüssigkeit, der mit einer schlagenden Bewegung der Herzfrequenz des Patienten übereinstimmt.

## Revendications

1. Système de simulation médicale (10) comprenant :
un système de pompage de fluide (101) destiné à pomper un fluide vers un modèle cardiaque physique (302) avec une forme et un aspect d'un cœur humain afin de simuler la pression sanguine pulsatoire sous pression du modèle cardiaque physique ;
une entrée (240-A) à partir de l'au moins un parmi i) un dispositif thérapeutique extracorporel (11) et/ou ii) un système d'administration de médicament ; et
un dispositif informatique (102) couplé au système de pompage de fluide ; et dans lequel :
le dispositif informatique comprend un processeur (202) et une mémoire (206) couplés l'un à l'autre pour exécuter des instructions ;
le dispositif informatique interagit avec le modèle cardiaque physique en générant et en communiquant au moins un signal cardiaque simulé (20,132-L,132-R) ;
le modèle cardiaque physique répond dynamiquement pour simuler le mouvement de battement (708) d'un cœur vivant sur la base du signal cardiaque simulé ; et
une action réflexe est simulée en générant au moins un signal cardiaque simulé et/ou des données virtuelles affichées sur la base d'un algorithme utilisant l'entrée d'au moins un parmi i) le dispositif thérapeutique extracorporel et/ou ii) le système d'administration de médicament.

2. Système de simulation médicale selon la revendication 1, comprenant en outre :
un système de simulation cardiaque (12) couplé au système de pompage de fluide, le système de simulation cardiaque comprenant : le modèle cardiaque physique avec la forme et l'aspect du cœur humain ;
une unité de déplacement mécanique (18, 500, 403) destinée à déplacer mécaniquement au moins une partie du modèle cardiaque physique ; une conduite de fluide (14, 260) couplée au modèle cardiaque physique ; et dans lequel :
le système de simulation cardiaque reçoit l'au moins un signal cardiaque simulé ;
la conduite de fluide communique le fluide pompé vers le modèle cardiaque physique pour simuler un taux de déplacement de fluide d'un cœur vivant ;
l'unité de déplacement mécanique destinée à déplacer mécaniquement au moins une partie du modèle cardiaque physique est configurée pour simuler un mouvement de battement du cœur vivant ; et
une impulsion du fluide de pression sanguine pulsatoire sous pression est synchronisée avec un mouvement de battement correspondant d'un rythme cardiaque.

3. Système de simulation médicale selon la revendication 2, dans lequel :
le dispositif informatique modifie le signal cardiaque simulé au cours du temps par modifications provenant d'un autre système ;
le système de simulation cardiaque réagit au cours du temps au changement dans le signal cardiaque simulé en effectuant un changement dans l'unité de déplacement mécanique pour déplacer mécaniquement le modèle cardiaque physique avec une forme et un aspect d'un cœur humain ; et
le système de simulation médicale est configuré pour modifier de manière réflexe au moins un d'un volume sanguin ou d'une pression sanguine dans la conduite de fluide en réponse à un changement dans un autre système.

4. Système de simulation médicale selon la revendication 2, dans lequel :
l'unité de déplacement mécanique destinée à déplacer mécaniquement un modèle cardiaque physique avec la forme et l'aspect d'un cœur humain dans le système de simulation cardiaque répond à l'au moins un signal cardiaque simulé provenant du dispositif informatique ; et l'au moins un signal cardiaque simulé simule au moins un état pathologique de :
une fréquence cardiaque de fibrillation ;
une fréquence cardiaque arythmique ;
une ischémie myocardique ;
un anévrisme cardio-vasculaire ;
un état d'hypertrophie ;
un état de tachycardie ;
un cœur élargi ; et
un état d'artériosclérose.

5. Système de simulation médicale selon la revendication 1, comprenant en outre :
un dispositif d'affichage/d'administration de patient couplé au dispositif informatique, le dispositif d'affichage/d'administration de patient comprenant une interface d'entrée d'opérateur destinée à sélectionner au moins une variable choisie par un opérateur d'un scénario clinique et un réglage sélectionnable de l'au moins une machine thérapeutique ; et dans lequel :
le dispositif informatique est couplé au dispositif d'affichage/d'administration du patient pour recevoir l'au moins une variable choisie par l'opérateur ; et le dispositif informatique génère le signal cardiaque simulé pour le déplacement mécanique du modèle cardiaque physique avec la forme et l'aspect du cœur humain sur la base au moins en partie de la variable choisie par l'opérateur.

6. Système de simulation médicale selon la revendication 2, comprenant en outre :
un affichage d'instructeur couplé au dispositif informatique, l'affichage d'instructeur comprenant une interface d'entrée d'instructeur destinée à ajuster au moins une variable choisie par un instructeur d'un scénario clinique, une métrique d'état du système de simulation cardiaque et une métrique de performance de l'au moins une machine thérapeutique ; et dans lequel :
le dispositif informatique est couplé à l'affichage d'instructeur pour recevoir l'au moins une variable choisie par un instructeur ; et
le dispositif informatique génère le signal cardiaque simulé pour le déplacement mécanique du modèle cardiaque physique avec la forme et l'aspect du cœur humain sur la base au moins en partie de la variable choisie par un instructeur.

7. Système de simulation médicale selon la revendication 2, dans lequel :
l'au moins un signal cardiaque simulé généré pour le système de simulation cardiaque comprend au moins l'un parmi un signal de profil de déplacement pour une course d'extension, un signal de profil de déplacement pour une course de rétraction et une fréquence ; et
l'appareil de simulation cardiaque est programmable pour s'adapter à une grande variété de scénarios cliniques et de modifications d'équipement.

8. Système de simulation médicale selon la revendication 2, dans lequel :
la conduite de fluide reçoit un fluide sous pression via le modèle cardiaque physique pour simuler un déplacement de fluide d'un cœur vivant ;
et
le dispositif informatique exécute en outre les instructions suivantes :
le calcul, via le dispositif informatique, d'un signal cardiaque simulé pour le système de simulation cardiaque, comprenant au moins un parmi une pression sanguine, un volume sanguin et un rythme cardiaque ;
la communication du signal cardiaque simulé au système de simulation cardiaque ; et
le fonctionnement du système de simulation cardiaque selon le signal cardiaque simulé afin de simuler une réponse physiologique de mouvement mécanique dans un modèle cardiaque physique ayant une forme et un aspect d'un cœur humain dans celui-ci, à l'au moins une entrée.

9. Système de simulation médicale selon la revendication 1, dans lequel :
le dispositif informatique exécute en outre les instructions suivantes :
le changement du signal cardiaque simulé au cours du temps selon des changements survenant dans un autre système ;
le système de simulation cardiaque réagit au changement du signal cardiaque simulé ; et
l'autre système comprend l'au moins un système parmi un système cardio-vasculaire, un système respiratoire, un système hématologique, un système rénal, un système d'échange gazeux par un système pulmonaire artificiel et un système d'interaction médicamenteuse.

10. Système de simulation médicale selon la revendication 2, dans lequel :
le dispositif informatique exécute en outre les instructions suivantes :
l'interaction du système de simulation cardiaque avec l'au moins un parmi i) le dispositif thérapeutique extracorporel et/ou ii) le système d'administration de médicament ;
le fonctionnement de la pompe à fluide à un scénario de niveau de performance réduit qui simule un cœur malade ; et
la création de manière algorithmique de données et leur affichage à partir d'un modèle cardio pour créer un environnement physique/virtuel mixte comprenant au moins des données calculées de pression veineuse centrale (CVP).

11. Système de simulation médicale selon la revendication 2, dans lequel :
la conduite de fluide pulse une pression sanguine qui correspond à un mouvement de battement de la fréquence cardiaque du patient.

12. Système de simulation médicale selon la revendication 3, dans lequel :
l'autre système comprend l'au moins un système parmi un système cardio-vasculaire, un système respiratoire, un système hématologique, un système rénal, un système d'échange gazeux par un système pulmonaire artificiel et un système d'interaction médicamenteuse.

13. Système de simulation médicale selon la revendication 1, dans lequel :
le dispositif informatique exécute en outre les instructions suivantes :
l'interaction via au moins un parmi : i) des interfaces virtuelles avec des affichages et des commandes utilisant des algorithmes ou des modèles ; ou ii) simulées dans un équipement représentatif.

14. Système de simulation médicale selon la revendication 1, dans lequel :
le système fournit l'au moins un élément parmi i) une communication bidirectionnelle ; ii) une interaction ; et/ou iii) une rétroaction reçue d'un patient simulé, d'une machine thérapeutique extracorporelle, d'un opérateur et d'un opérateur du système.

15. Un procédé de fonctionnement d'un système de simulation médicale comportant un système de simulation cardiaque avec un modèle cardiaque physique qui est couplé à un dispositif informatique et à une interface d'entrée, le procédé comprenant :
le calcul, via le dispositif informatique, d'un signal cardiaque simulé pour le système de simulation cardiaque, comprenant au moins un parmi une pression sanguine, un volume sanguin et un rythme cardiaque ;
la communication du signal cardiaque simulé à l'appareil de simulation cardiaque ;
le fonctionnement de l'appareil de simulation cardiaque selon le signal cardiaque simulé afin de simuler une réponse physiologique de mouvement mécanique dans un modèle cardiaque physique ayant une forme et un aspect d'un cœur humain dans celui-ci, à l'au moins une entrée ;
la réception d'un fluide sous pression via une conduite de fluide au modèle cardiaque physique pour simuler un déplacement de fluide d'un cœur vivant ;
la simulation d'une action réflexe de système de simulation cardiaque en générant au moins un signal cardiaque simulé et/ou des données virtuelles affichées sur la base d'un algorithme utilisant l'entrée d'au moins un parmi i) le dispositif thérapeutique extracorporel et/ou ii) le système d'administration de médicament ; et
la synchronisation d'une impulsion du fluide sous pression qui correspond à un mouvement de battement de la fréquence cardiaque du patient.
